# EUROPÄISCHE PATENTSCHRIFT

(11) **EP 0 814 131 B1**
(45) Veröffentlichungstag und Bekanntmachung des Hinweises auf die Patenterteilung: **22.03.2000**
(21) Anmeldenummer: 97109377.8
(22) Anmeldetag: 10.06.1997
(51) Int. Cl.: C09B 62/517, C09B 62/036, C09B 62/10, C09B 62/26, C09B 62/443

(54) **Reaktive Aluminiumphthalocyaninfarbstoffe, Verfahren zu ihrer Herstellung und Verwendung**
Reactive aluminiumphthalocyanine dyes, process for their preparation and use thereof
Colorants réactifs à base de phtalocyanine d'aluminium, leur procédé de production et leur utilisation

(30) Priorität: 19.06.1996 DE 19624469
(43) Veröffentlichungstag der Anmeldung: 29.12.1997
(73) Patentinhaber: DyStar Textilfarben GmbH & Co. Deutschland KG, 60318 Frankfurt am Main (DE)
(72) Erfinder: Herd, Karl-Josef, Dr., 51519 Odenthal (DE); Saitmacher, Klaus, Dr., 65830 Kriftel (DE)

(56) Entgegenhaltungen:
- EP-A- 0 761 767
- DE-A- 19 521 056
- DE-A- 19 622 180
- GB-A- 1 060 086

## Beschreibung

Gegenstand der Erfindung sind neue faserreaktive Aluminiumphthalocyaninfarbstoffe, ihre Herstellung und Verwendung. Die Verwendung von schwermetallhaltigen Phthalocyaninverbindungen, besonders Kupferphthalocyanin und Nickelphthalocyanin, in Reaktivfarbstoffen ist bekannt. Beispielsweise werden in den U.S. Patentschriften 4 237 050, 4 350 632 und 4 745 187 faserreaktive Schwermetallphthalocyanin-Farbstoffe beschrieben, die eine über einen N-Arylsulfonamid- oder N-Alkylsulfonamid-Rest gebundene, faserreaktive Gruppe der Vinylsulfonreihe besitzen. Mit diesen Reaktivfarbstoffen werden hauptsächlich türkisfarbene und grüne Farbtöne beim Färben von Baumwolle erzielt. Die Färbungen mit diesen Farbstoffen besitzen gute Echtheiten, insbesondere Lichtechtheiten. Obwohl die Schwermetalle in diesen Farbstoffen in Form eines stabilen Komplexes gebunden sind, gelten Kupfer und besonders Nickel heutzutage als ökologisch problematisch. So können die Schwermetallionen beim Prozeß der Verrottung oder der Verbrennung von gebrauchten Textilien, die diese Farbstoffe enthalten, frei werden und damit die Umwelt belasten.

Ebenso sind in der GB-A-1 060 086 Phthalocyaninfarbstoffe mit dem Schwermetall Kupfer als Zentralatom beschrieben, die als faserreaktive Gruppe eine Gruppe der Vinylsulfonreihe besitzen.

Aus diesem Grunde wurden Phthalocyaninfarbstoffe entwickelt, die entweder überhaupt keine Schwermetalle als Zentralatom besitzen (DE-A-43 40 160) oder ökologisch und toxikologisch unbedenkliche Metalle komplex gebunden enthalten, wie z. B. Eisen, Titan oder Zink (DE-A-43 38 853) oder Aluminium (DE-A-195 21 056), wobei die in der letztgenannten Schrift beschriebenen Aluminiumphthalocyaninfarbstoffe als faserreaktiven Rest einen halogensubstituierten Triazin- oder Pyrimidin-Rest enthalten, der über eine Aminogruppe und einen Pyridon-azo-phenyl- oder einen Pyrazolon-azo-phenyl- oder Phenylenrest an die Sulfonamidgruppe des Aluminiumphthalocyaninrestes gebunden ist, jedoch keine faserreaktive Gruppe der Vinylsulfonreihe enthalten. Die Reaktivfarbstoffe, die auf diesen Phthalocyaninchromophoren basieren, erreichen jedoch anwendungstechnisch nicht die entsprechenden Kupfer- und Nickelphthalocyaninfarbstoffe.

Die Aufgabe der vorliegenden Erfindung bestand darin, neue wasserlösliche faserreaktive Phthalocyaninfarbstoffe bereitzustellen, die nach ökologischen Gesichtspunkten unbedenklich sind und gleichzeitig gute anwendungstechnische Eigenschaften besitzen.

Diese Aufgabe wurde durch nachstehend beschriebene Aluminiumphthalocyaninfarbstoffe gelöst. Sie besitzen überraschenderweise gute bis sehr gute Echtheiten, insbesondere Lichtechtheiten und sogar gegenüber den Cu- und Ni-Phthalocyaninfarbstoffen ein besseres Farbstärkeprofil und einen besseren Farbaufbau insbesondere bei niedrigen Färbetemperaturen, wie z.B. 40 bis 60°C. Auch für Kombinationsfärbungen sind die erfindungsgemäßen Farbstoffe sehr gut geeignet.

Gegenstand der vorliegenden Erfindung sind Aluminiumphthalocyanin-Reaktivfarbstoffe der Formel (1) 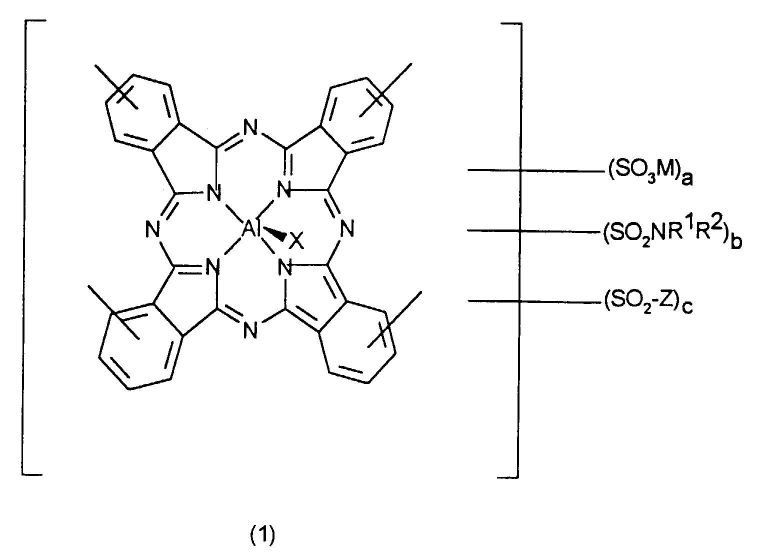 worin
- X: Cl oder OH;
- Z: Vinyl oder eine Gruppe der Formel -CH₂CH₂-Y, in der Y einen alkalisch eliminierbaren Substituenten bedeutet, insbesondere Chlor, Sulfato, Thiosulfato, Acetato oder Phosphato, bevorzugt Sulfato; oder Y die Gruppe Sulfo, Hydroxy oder -NR-T bedeutet, worin T ein faserreaktiver heterocyclischer Rest, und R Wasserstoff, C₁-C₆-Alkyl oder ein mit OH, SO₃M, OSO₃M, COOM, OCH₃ oder OC₂H₅ substituiertes C₁-C₆-Alkyl ist;
- a: eine Zahl von 0 bis 3;
- b: eine Zahl von 0 bis 4;
- c: eine Zahl von 0,5 bis 4;
- M: Wasserstoff, ein Alkalimetall oder ein substituiertes oder unsubstituiertes Ammoniumion; und
- R¹ und R²: unabhängig voneinander Wasserstoff, C₁-C₆-Alkyl, ein durch ein bis zwei Reste der Formeln OH, SO₃M oder OSO₃M substituiertes C₁-C₆-Alkyl, Phenyl, ein durch ein bis drei Reste der Formeln OH, SO₃M oder COOM substituiertes Phenyl oder ein Rest der Formeln (2), (3) oder (4) bedeuten 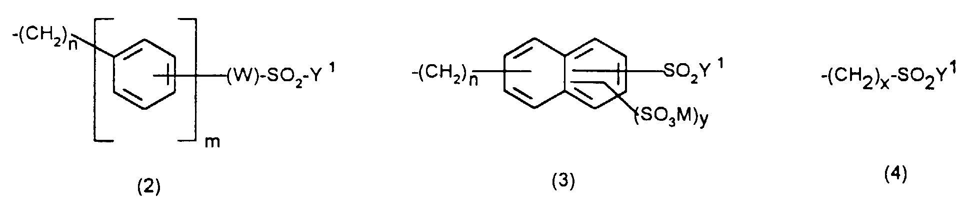 worin
n eine Zahl von 0 bis 3,
m die Zahl 0 oder 1, wobei die Summe n + m 1,2, 3 oder 4 ist,
x eine ganze Zahl von 2 bis 6,
y eine Zahl von 0 bis 3,
W C₁-C₆-Alkylen, -(CH₂)₂-O-(CH₂)₂- oder eine chemische Bindung,
Y¹ -CH=CH₂, -CH₂CH₂Cl, -CH₂CH₂OH oder -CH₂CH₂OSO₃M sind; oder R¹ und R² zusammen mit dem benachbarten Stickstoffatom einen 3- bis 9-gliedrigen, vorzugsweise 5 bis 7-gliedrigen, gesättigten oder ungesättigten N-Heterocyclus, oder mit einer weiteren Heterogruppe aus der Reihe -O-, -S-, -SO₂-, -N=, -NR³, worin R³ Wasserstoff, C₁-C₄-Alkyl, C₁-C₄-Hydroxyalkyl, C₁-C₄-Chloralkyl oder C₁-C₄-Sulfatoalkyl bedeutet, einen 5- bis 8-gliedrigen, vorzugsweise 5- oder 6-gliedrigen, gesättigten oder ungesättigten Heterocyclus bilden.

Die einzelnen Formelglieder können im Rahmen ihrer Bedeutung zueinander gleiche oder voneinander verschiedene Bedeutungen besitzen.
Die erfindungsgemäßen Phthalocyaninfarbstoffe werden in der Regel in Form von Gemischen der Einzelverbindungen der allgemeinen Formel (1) erhalten, wobei sich diese Einzelverbindungen voneinander durch den Substitutionsgrad der Sulfo- und Sulfonamidgruppen an dem Phthalocyaninrest unterscheiden. Die Formeln der erfindungsgemäßen Phthalocyaninfarbstoffe haben deshalb Indices, die in der Regel gebrochene Zahlen sind.

Bevorzugt sind Farbstoffe der Formel (1), worin
- X: OH ist;
- Z: -CH = CH₂, -CH₂CH₂Cl, -CH₂CH₂OSO₃M, -CH₂CH₂SSO₃M, -CH₂CH₂-OCOCH₃, -CH₂CH₂-OPO₃M, -NR-triazinyl oder NR-pyrimidinyl, wobei die Triazinyl- und Pyrimidinyl-Reste durch Halogene, Amino- und/oder Cyanogruppen substituiert sind;
die Summe a + b + c eine Zahl zwischen 2,0 und 4,0 ist;
- M: Wasserstoff, Lithium, Natrium, Kalium, Ammonium, ein Mono-, Di-, Tri- oder Tetramethylammoniumion, ein Mono-, Di-, Tri- oder Tetraethylammoniumion oder ein Mono-, Di- oder Triethanolammoniumion,
- R¹ und R²: unabhängig voneinander Wasserstoff, C₁-C₄-Alkyl, C₁-C₄-Sulfoalkyl, C₁-C₄-Sulfatoalkyl, oder zusammen mit dem benachbarten N-Atom einen Heterocyclus der Formeln 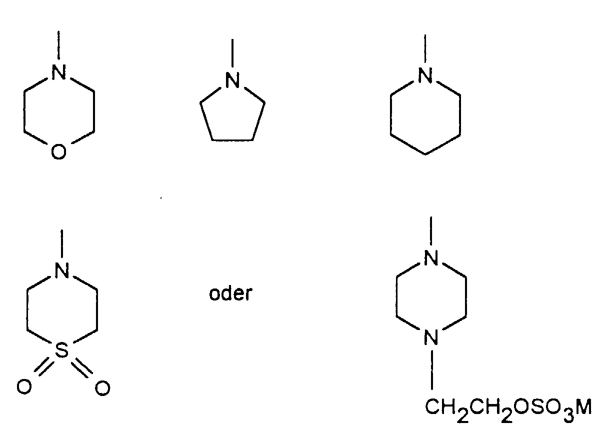 bedeuten.

Von besonderem Interesse sind Farbstoffe der Formel (1), worin
- X: OH ist;
- a: eine Zahl von 0 bis 3;
- b: die Zahl 0;
- c: eine Zahl von 0,5 bis 4;
- Z: -CH =CN₂ oder -CH₂CH₂-OSO₃M und
- M: Wasserstoff, Natrium oder Kalium bedeuten.

Von besonderem Interesse sind weiterhin Farbstoffe der Formel (1), worin
- X: OH ist;
- a: eine Zahl von 0 bis 3;
- b: die Zahl 0;
- c: eine Zahl von 0,5 bis 4,0;
- Z: eine Gruppe der Formel CH₂CH₂NR⁴T¹ ist, worin R⁴ die Bedeutung H, CH₃, C₂H₅, C₃H₇, CH₂CH₂OH, CH₂CH₂SO₃M, CH₂CH₂OSO₃M oder CH₂COOM hat und T¹ einen Rest der Formeln 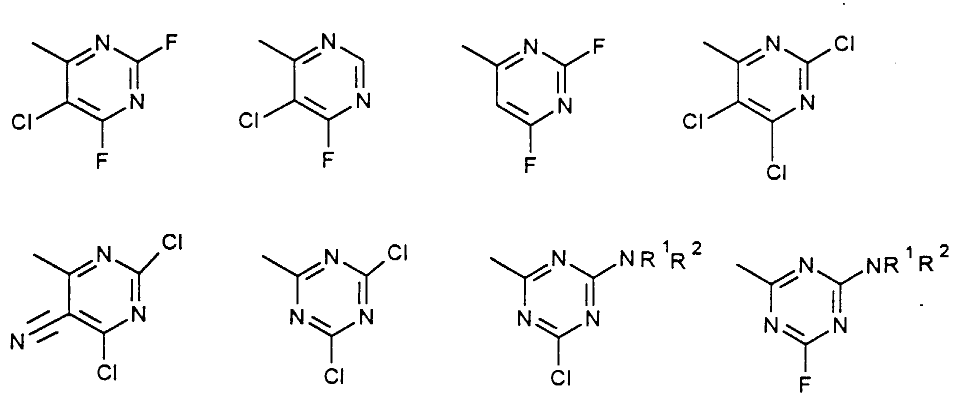 bedeutet und M wie vorstehend definiert ist.

Von besonderem Interesse sind weiterhin Farbstoffe der Formel (1), worin
- X: OH ist;
- a: eine Zahl von 0 bis 3;
- b: eine Zahl von 0,5 bis 2,0;
- c: eine Zahl von 0,5 bis 4,0;
- R¹ und R²: unabhängig voneinander H, CH₃, C₂H₅, CH₂CH₂SO₃M, CH₂CH₂OSO₃M sind oder zusammen mit dem benachbarten N-Atom einen Heterocyclus der Formeln 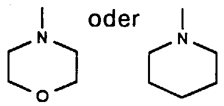 bilden und
- M und Z: eine der genannten Bedeutungen haben.

Von besonderem Interesse sind weiterhin die Farbstoffe der Formel (1), worin
- X: OH ist;
- a: eine Zahl von 0 bis 3;
- b: eine Zahl von 0,5 bis 2,0;
- c: eine Zahl von 0,5 bis 4,0;
- R¹: Wasserstoff;
- R²: einen Rest der Formel (2) oder (4), worin x die Zahl 2, m die Zahl 1, n die Zahl 0, W eine chemische Bindung und Y¹ Vinyl oder β-Sulfatoethyl sind;
- Z: Vinyl oder β-Sulfatoethyl bedeutet und
- M: wie vorstehend definiert ist.

Gegenstand der vorliegenden Erfindung ist auch ein Verfahren zur Herstellung einer Verbindung der Formel (1), dadurch gekennzeichnet, daß man das Säurechlorid der Formel (5) 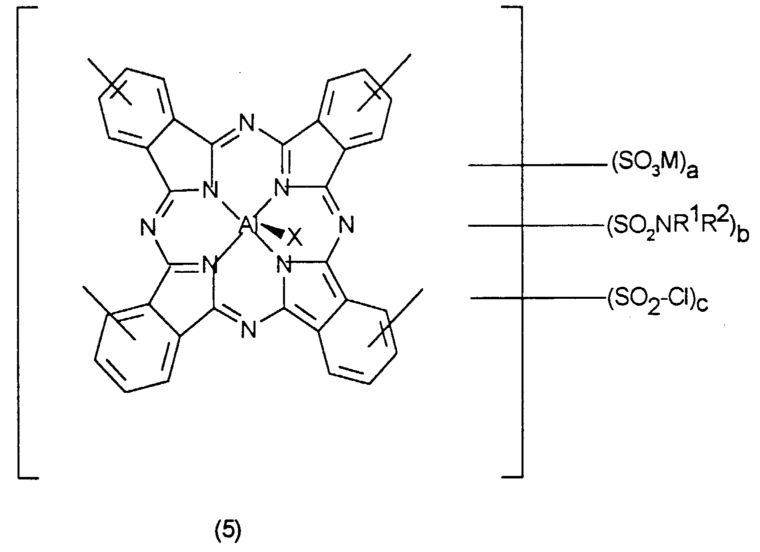 zur Sulfinsäure der Formel (6) reduziert, 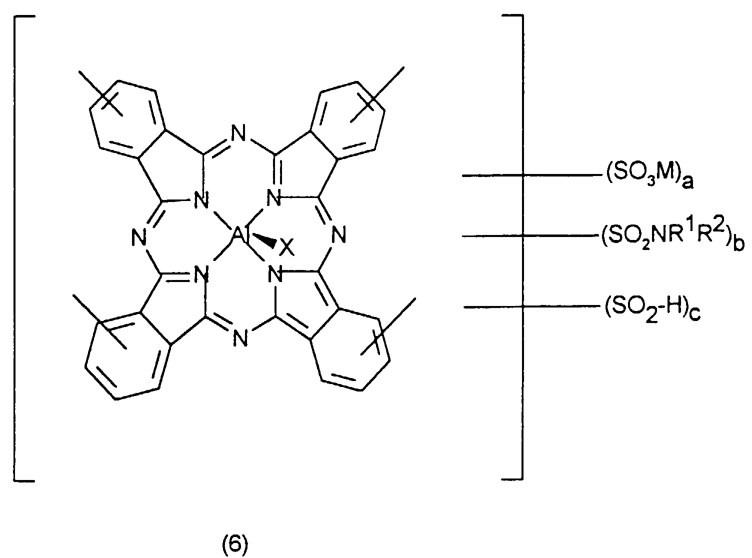 die Verbindung der Formel (6) zur Verbindung der Formel (1a) ethoxyliert 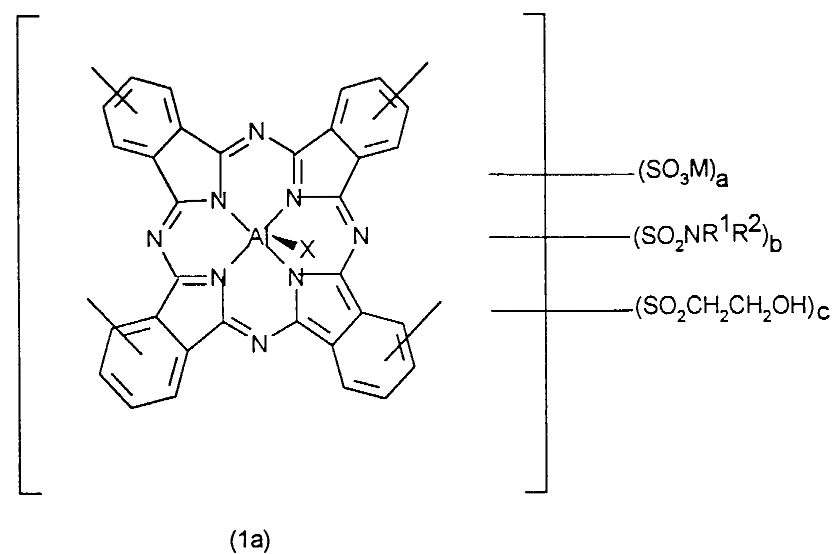 die Verbindung der Formel (1a) gegebenenfalls chloriert, sulfatiert, thiosulfatiert, phosphoryliert oder acetyliert, wobei eine Verbindung der Formel (1) mit Z gleich -CH₂CH₂Cl, -CH₂CH₂OSO₃M, -CH₂CH₂SSO₃M, -CH₂CH₂OPO₃M oder -CH₂COOM entsteht,
die gegebenenfalls einer Eliminierungsreaktion unterworfen wird, wobei eine Verbindung der Formel (1) mit Z gleich Vinyl entsteht,
gegebenenfalls eine Verbindung der Formel (1) mit Z gleich Vinyl, β-Sulfatoethyl, β-Thiosulfatoethyl, β-Phosphatoethyl oder β-Acetatoethyl mit einem Amin der Formel H₂NR umsetzt, wobei eine Verbindung der Formel (1) mit Z gleich -CH₂CH₂NHR entsteht, welche nach ihrer Zwischenisolierung mit einer heterocyclischen Verbindung der Formel Hal-T mit Hal gleich Chlor oder Fluor umgesetzt wird, wobei eine Verbindung der Formel (1) mit Z gleich -CH₂CH₂NR-T entsteht;
oder zur Herstellung einer Verbindung der Formel (1) mit Z gleich -CH₂CH₂SO₃M, entweder eine Verbindung der Formel (6) mit 1-Chlorethan-2-sulfonsäure umgesetzt wird, oder eine Verbindung der Formel (1) mit Z gleich Vinyl mit M₂SO₃, bevorzugt Na₂SO₃, umgesetzt wird.

Nach dieser Herstellungsvariante sind die der Zahl b entsprechenden Sulfonamid-Reste -SO₂NR¹R² bereits in der Ausgangsverbindung enthalten.

In einer alternativen Herstellungsvariante geht man von einer Verbindung der Formel (7) aus 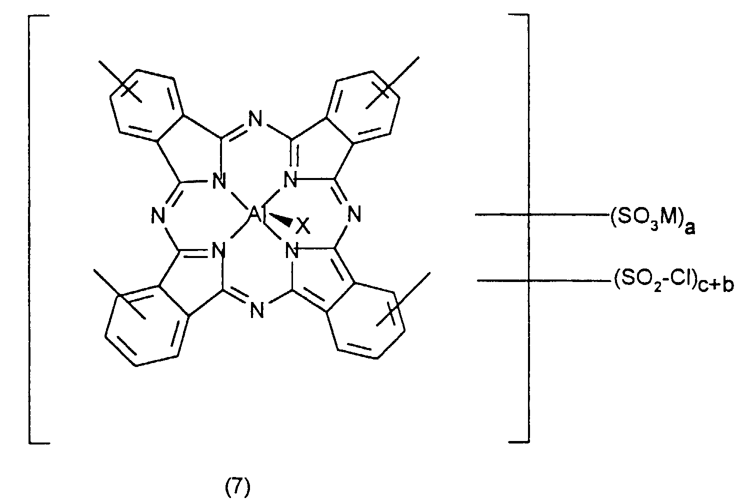 die (c + b) SO₂Cl-Gruppen enthält, setzt diese Verbindung mit einer der gewünschten Zahl b entsprechenden stöchiometrischen Menge eines Amins der Formel HNR¹R² um, wobei eine Verbindung der Formel (5) entsteht, die wie vorstehend beschrieben zu einer Verbindung der Formel (1) weiter umgesetzt wird.
Es ist auch möglich, die besagte Verbindung der Formel (7) zunächst mit einer der gewünschten Zahl c entsprechenden stöchiometrischen Menge des Reduktionsmittels teilweise zur Sulfinsäure zu reduzieren und anschließend mit einem Amin der Formel HNR¹R², welches auch im Überschuß eingesetzt werden kann, umzusetzen, wobei eine Verbindung der Formel (6) entsteht, die dann wie vorstehend beschrieben zu einer Verbindung der Formel (1) weiter umgesetzt wird.

Verbindungen der Formel (1b) 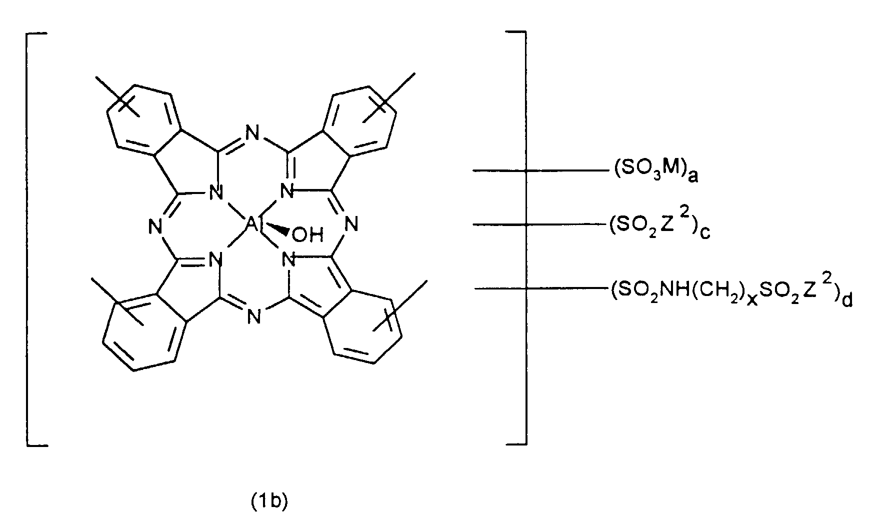 worin
- a: eine Zahl von 0 bis 3,0;
- c: eine Zahl von 0,5 bis 4,0;
- d: eine Zahl von 0,5 bis 2,0;
- x: eine Zahl von 2 bis 6, bevorzugt 2;
- Z²: Vinyl oder β-Sulfatoethyl bedeuten und M wie vorstehend definiert ist,
werden vorzugsweise hergestellt, indem man eine Verbindung der Formel (7a) 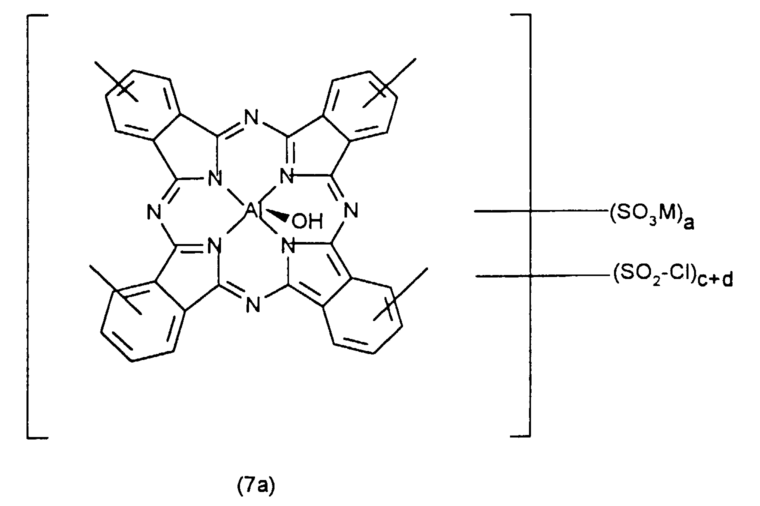 mit einer der gewünschten Zahl d entsprechenden stöchiometrischen Menge einer Alkylaminosulfonsäure der Formel H₂N-(CH₂)ₓ-SO₃M unter alkalischen Bedingungen zu einer Verbindung der Formel (8), 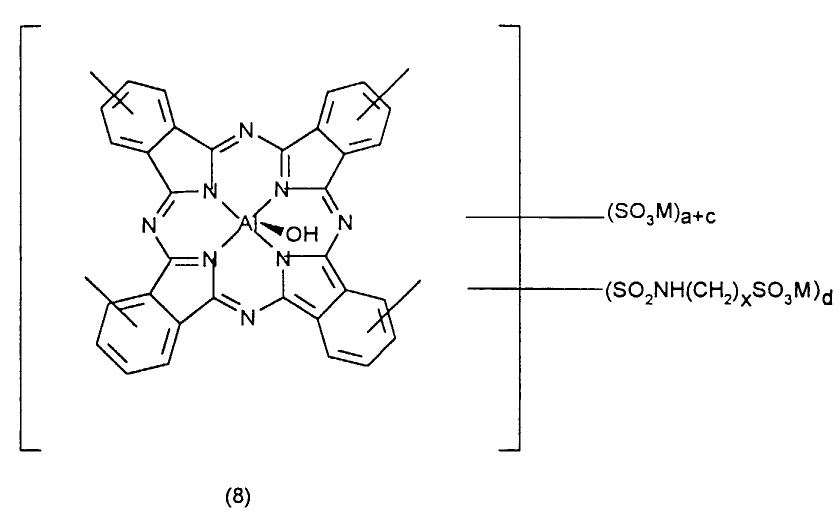 wobei die der Zahl c entsprechenden SO₂Cl-Gruppen verseift werden, umsetzt, die Verbindung der Formel (8) mit Chlorsulfonsäure und Thionylchlorid umsetzt, wobei die Sulfogruppen des Sulfonamidalkylrests und teilweise die direkt am Phthalocyaninchromophor gebundenen Sulfogruppen in SO₂Cl-Gruppen überführt werden; das so entstandene Reaktionsprodukt mit einem Reduktionsmittel, bevorzugt Natriumsulfit, reduziert, wobei aus den SO₂Cl-Gruppen Sulfinsäuregruppen entstehen; das so entstandene Reaktionsprodukt ethoxyliert, wobei die Sulfinsäurereste in Hydroxyethylsulfonylreste überführt werden; und anschließend sulfatiert, vorzugsweise mit Schwefelsäure, wobei Verbindungen der Formel (1b) mit Z² gleich β-Sulfatoethyl entstehen. Durch Eliminierung entsteht eine Verbindung der Formel (1b) mit Z² gleich Vinyl.

In den vorstehend beschriebenen Verfahrensvarianten werden die Reduktionsschritte vorzugsweise mit Natriumsulfit, Natriumbisulfit, Natriumdithionit oder den entsprechenden Kaliumsalzen in equimolaren Mengen oder in einem bis zu 10-fachen molaren Überschuß, bezogen auf die Anzahl der zu reduzierenden Gruppen, an Reduktionsmittel, zweckmäßigerweise bei einem pH-Wert zwischen 8 und 12 und bei einer Temperatur von 10 bis 50°C durchgeführt.

In den vorstehend beschriebenen Verfahrensvarianten werden die Ethoxylierungsreaktionen vorzugsweise mit Ethylenoxid, Chlorethanol oder Ethylencarbonat in equimolaren Mengen oder in einem bis zu 3-fachen molaren Überschuß, bezogen auf die Anzahl der zu ethoxylierenden Gruppen, an Ethoxylierungsmittel, zweckmäßigerweise bei einem pH-Wert zwischen 7 und 9 und bei einer Temperatur von 50 bis 70°C durchgeführt.

In den vorstehend beschriebenen Verfahrensvarianten werden die Sulfatierungsreaktionen vorzugsweise mit 80 bis 100 gew.-%iger Schwefelsäure, insbesondere Schwefelsäure-Monohydrat oder Oleum, in equimolaren Mengen oder in einem bis zu 10-fachen molaren Überschuß, bezogen auf die Anzahl der zu sulfatierenden Gruppen, an Sulfatierungsmittel, zweckmäßigerweise bei einer Temperatur von 0 bis 20°C durchgeführt.

In den vorstehend beschriebenen Verfahrensvarianten werden die Chlorierungsreaktionen vorzugsweise mit Thionylchlorid in equimolaren Mengen oder in einem bis zu 10-fachen molaren Überschuß, bezogen auf die Anzahl der zu chlorierenden Gruppen, bei einer Temperatur von 0 bis 80°C durchgeführt.

Die erfindungsgemäßen Farbstoffe eignen sich zum Färben oder Bedrucken von hydroxy- und/oder carbonamidgruppenhaltigem Material, bevorzugt cellulosehaltigen Fasermaterialien sowie Polyamid. Die Farbstoffe ergeben auf den genannten Materialien brillante, grün bis türkisfarbene Färbungen und Drucke, die sich durch gute Fixiergrade und Echtheiten auszeichnen. Insbesondere zeichnen sich die Farbstoffe dadurch aus, daß während des Färbe- oder Druckprozesses und ebenso beim Verrotten der Textilien nach deren Gebrauch keine Schwermetallionen an die Umgebung freigesetzt werden.

Die erfindungsgemäßen Farbstoffe können nach üblichen Färbemethoden auf das Material aufgebracht oder in das Material eingebracht und auf oder in dem Material mittels Wärme oder mit Hilfe eines alkalisch wirkenden Mittels oder durch beide Maßnahmen fixiert werden.

In den nachstehenden Beispielen bedeuten Teile Gewichtsteile, die Angaben in Prozent sind Gewichtsprozente, sofern nichts anderes vermerkt ist. Gewichtsteile verhalten sich zu Volumenteilen wie Kilogramm zu Liter.

### Beispiele:

### Herstellung der Verbindungen der Formel (7) und (7a)

Die Vorstufen für die erfindungsgemäßen Farbstoffe werden exemplarisch wie folgt erhalten:
a.) Aluminiumphthalocyanin wird in Chlorsulfonsäure eingetragen und bei Temperaturen zwischen 100°C und 150°C, bevorzugt bei Temperaturen zwischen 120°C und 140°C, mehrere Stunden, bevorzugt 3 bis 5 Stunden gerührt. Anschließend wird Thionylchlorid zugetropft und mehrere Stunden lang, bevorzugt etwa 2 bis 4 Stunden, bei Temperaturen zwischen 70°C und 90°C weitergerührt. Das Gemisch gibt man auf Eis und saugt das Aluminiumphthalocyanin-Sulfochlorid ab.
b.) Alternativ kann das Aluminiumphthalocyanin-Sulfochlorid durch Sulfochlorierung mit Chlorsulfonsäure erhalten werden. Die Umsetzung mit Thionylchlorid wird jedoch nicht durchgeführt. Man erhält ein Produkt, das neben den Sulfochlorgruppen noch freie Sulfonsäuregruppen besitzt. Diese reagieren bei der Umsetzung mit Sulfit nicht und bleiben während der weiteren Umsetzungen erhalten.

Bei den vorstehend beschriebenen Verfahrensvarianten entsteht ein Aluminiumphthalocyanin mit X gleich Cl. Bei der Umsetzung des AlPcCl-Sulfochlorids in wäßrigem oder alkalisch-wäßrigem Medium wird Cl gegen OH ausgetauscht.

### Beispiel 1

### Aluminiumphthalocyanin

157 Teile Phthalodinitril werden mit 52 Teilen Aluminium(III)chlorid und 600 Teilen Natriumsulfat innig vermischt und gemahlen. Das Gemisch wird anschließend innerhalb einer Stunde auf 250°C erwärmt.
Das Reaktionsgemisch wird für weitere 90 Minuten bei dieser Temperatur gehalten. Nach dem Erkalten wird die Masse aus dem Reaktionsgefäß entnommen und gemahlen. Das dunkle Pulver wird in 1000 Teile Wasser bei 95°C gegeben, für 15 Minuten rühren gelassen und abgesaugt. Der Rückstand wird in 1000 Teilen 5n Salzsäure aufgenommen und für eine Stunde rühren gelassen. Es wird wieder abgesaugt, in 1000 Teile 95°C heißes Wasser gegeben, abgesaugt und anschließend bei 60°C im Vakuum getrocknet.

### Beispiel 2 a

### Aluminiumphthalocyanintrisulfochlorid

59 Teile Aluminiumphthalocyanin aus Beispiel 1 werden in 275 Teile Chlorsulfonsäure gegeben und auf 95°C erhitzt. Es wird für 15 Minuten weiter bei dieser Temperatur rühren gelassen und dann weiter auf 135°C geheizt. Nach 5 Stunden wird auf 80-85°C abgekühlt und 83 Teile Thionylchlorid langsam innerhalb von 45 Minuten zugetropft. Nach Abkühlung auf Raumtemperatur wird das Reaktionsgemisch auf 1200 Teile Eis gegeben, abgesaugt und mit 1000 Teilen Eiswasser gewaschen. Der pH-Wert der letzten Waschwasserfraktion liegt im Bereich von 2 bis 3. Das isolierte feuchte Aluminiumphthalocyanintrisulfochlorid wird wie in Beispiel 3a weiter umgesetzt.

### Beispiel 2 b

### Aluminiumphthalocyaninsulfochlorid/sulfosäure (2,2:1,2)

59 Teile (0.1 mol) Aluminiumphthalocyanin aus Beispiel 1 werden in 525 Teile Chlorsulfonsäure gegeben und das Reaktionsgemisch auf 135°C erhitzt. Es wird für 6 Stunden bei dieser Temperatur gerührt. Nach Abkühlung auf Raumtemperatur wird das Reaktionsgemisch auf 1200 Teile Eis gegeben, abgesaugt und mit 1000 Teilen 1 N Salzsäure gewaschen. Der pH-Wert der letzten Waschwasserfraktion liegt im Bereich von 2 bis 3. Die isolierte feuchte Aluminiumphthalocyaninsulfochlorid/sulfosäure (2,2:1,2) wird in Beispiel 3 b weiter umgesetzt.

### Beispiel 3 a

### Aluminiumphthalocyaninsulfinat

133 Teile Natriumsulfit werden mit 97 Teilen Natriumbicarbonat in 2000 Teile Wasser gegeben. Dazu werden 180 Teile feuchtes Aluminiumphthalocyanintrisulfochlorid aus Beispiel 2a bei 10 bis 15°C innerhalb von 30 Minuten eingetragen. Das Reaktionsgemisch wird 5 Stunden bei 10 bis 15°C und 15 Stunden bei Raumtemperatur und anschließend 30 Minuten bei 40°C gerührt. Nach dem Abkühlen auf Raumtemperatur wird mit 310 ml HCl konz. auf pH 1 gestellt und eine Stunde bei Raumtemperatur gerührt. Es wird mit dreimal 500 Teilen 1 N Salzsäure gewaschen. Das feuchte Produkt wird direkt für die weitere Umsetzung verwendet.

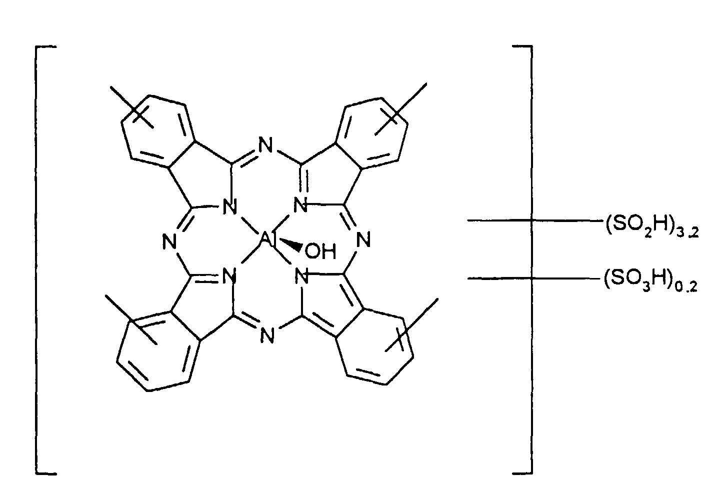

### Beispiel 3b

### Aluminiumphthalocyaninsulfinat/sulfonat (2,2:1,2)

133 Teile Natriumsulfit werden mit 97 Teilen Natriumbicarbonat in 2000 Teile Wasser gegeben. Dazu werden 180 Teile feuchtes Aluminiumphthalocyaninsulfochlorid/sulfosäure (2,2:1,2) aus Beispiel 2b bei 10 bis 15°C innerhalb von 30 Minuten eingetragen. Das Reaktionsgemisch wird 5 Stunden bei 10 bis 15°C und 15 Stunden bei Raumtemperatur und anschließend 30 Minuten bei 40°C gerührt. Nach dem Abkühlen auf Raumtemperatur wird mit 310 ml HCl konz. auf pH 1 gestellt und eine Stunde bei Raumtemperatur gerührt. Es wird mit dreimal 500 Teilen 1 N Salzsäure gewaschen. Das feuchte Produkt wird direkt für die weitere Umsetzung verwendet.

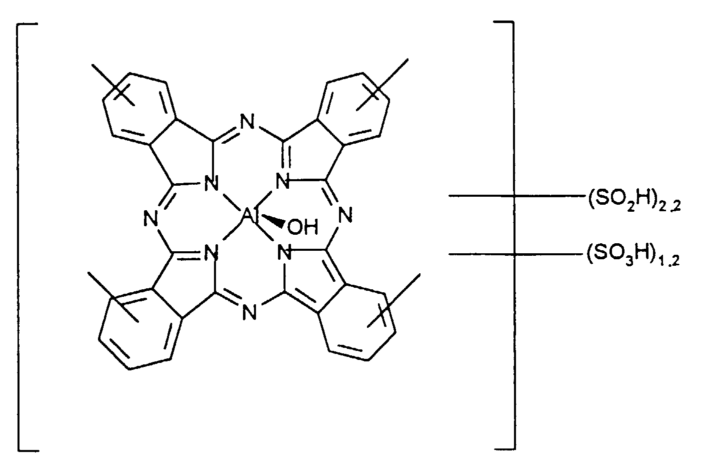

### Beispiel 4a

### Umsetzung mit Chlorethanol und Veresterung

190 Teile Aluminiumphthalocyanin-sulfinat aus Beispiel 3a werden in 2000 Teile Wasser gegeben, und mit 2n NaOH wird ein pH-Wert von 7,3 eingestellt. Dann werden 56,4 Teile 2-Chlorethanol zugetropft und die Temperatur auf 65°C erhöht. Mit 2n Natronlauge wird der pH-Wert während der gesamten Reaktionszeit von 20 Stunden bei 9.5-9.6 gehalten. Anschließend wird mit verd. Salzsäure auf pH 6.8 gestellt, der Niederschlag abgesaugt und getrocknet. Man erhält ein Produkt der Formel

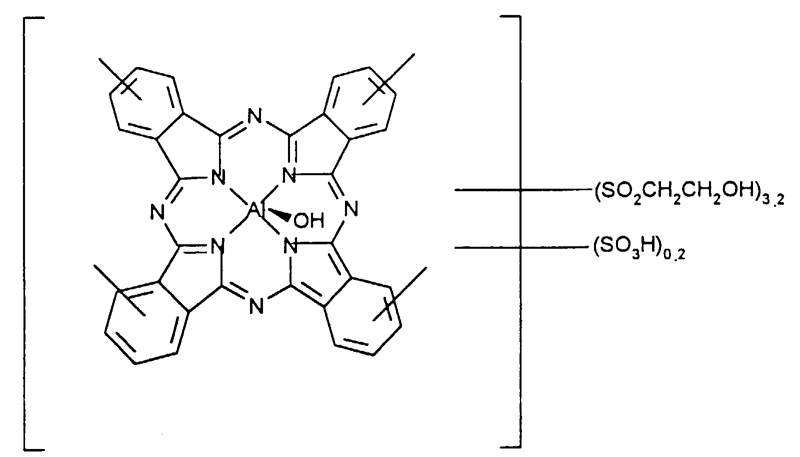

Anschließend werden 91 Teile dieses Farbstoffs in 540 Teile Schwefelsäure-Monohydrat bei 15 bis 20°C eingetragen und bei 20°C für 12 Stunden gerührt. Das Reaktionsgemisch wird auf 2600 Teile Eis gegossen, der Niederschlag abgesaugt und mit insgesamt 2500 ml 5%iger Salzsäure gewaschen. Der Preßkuchen wird wieder in 750 Teile Wasser eingetragen und mit 2n Natronlauge bei einem pH-Wert von 6 gelöst. Der Reaktivfarbstoff wird durch Trocknen im Vakuumschrank oder durch Aussalzen isoliert.

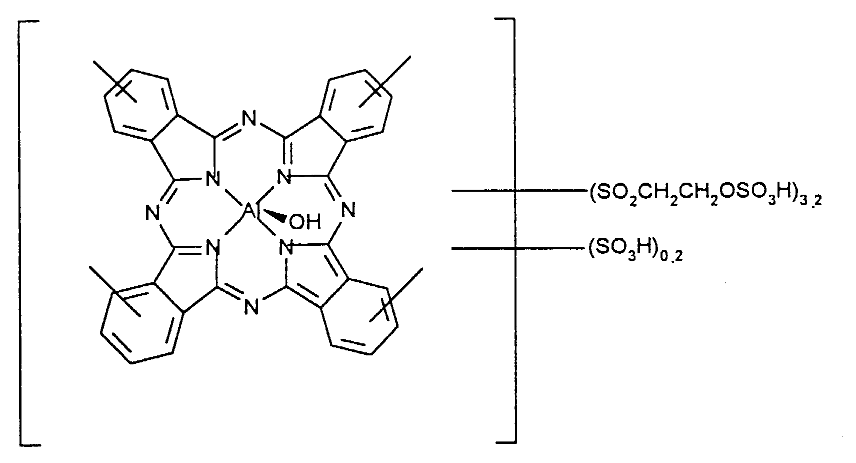

Man erhält ein dunkelgrünes Produkt mit einem Lambdaₘₐₓ = 676 nm in H₂0. Der Reaktivfarbstoff ist in Wasser gut löslich und gibt auf Baumwollfasern brillante grüne Drucke und Färbungen mit guten Echtheiten.

### Beispiel 4b

### Umsetzung mit Chlorethanol und Veresterung

190 Teile Aluminiumphthalocyanin-sulfinat/sulfonat (2,2:1,2) aus Beispiel 3b werden in 2000 Teile Wasser gegeben und mit 2n NaOH wird ein pH-Wert von 7,3 eingestellt. Dann werden 56,4 Teile 2-Chlorethanol zugetropft und die Temperatur auf 65°C erhöht. Mit 2n Natronlauge wird der pH-Wert während der gesamten Reaktionszeit von 20 Stunden bei 9.5-9.6 gehalten.
Anschließend wird mit verd. Salzsäure auf pH 6.8 gestellt, der Niederschlag abgesaugt und bei 50°C im Vakuumschrank getrocknet. Man erhält ein Produkt der Formel

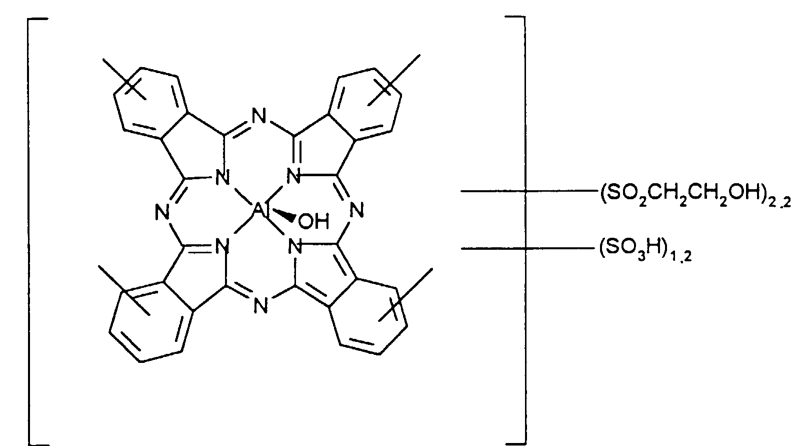

Anschließend werden 91 Teile dieses Farbstoffes in 540 Teile Schwefelsäure-Monohydrat bei 15 bis 20°C eingetragen und bei 20°C für 12 Stunden gerührt. Das Reaktionsgemisch wird auf 2600 Teile Eis gegossen, der Niederschlag abgesaugt und mit insgesamt 2500 ml 5%iger Salzsäure gewaschen. Der Preßkuchen wird wieder in 750 Teile Wasser eingetragen und mit 2n Natronlauge bei einem pH-Wert von 6 gelöst. Der Reaktivfarbstoff wird durch Trocknen im Vakuumschrank oder durch Aussalzen isoliert.

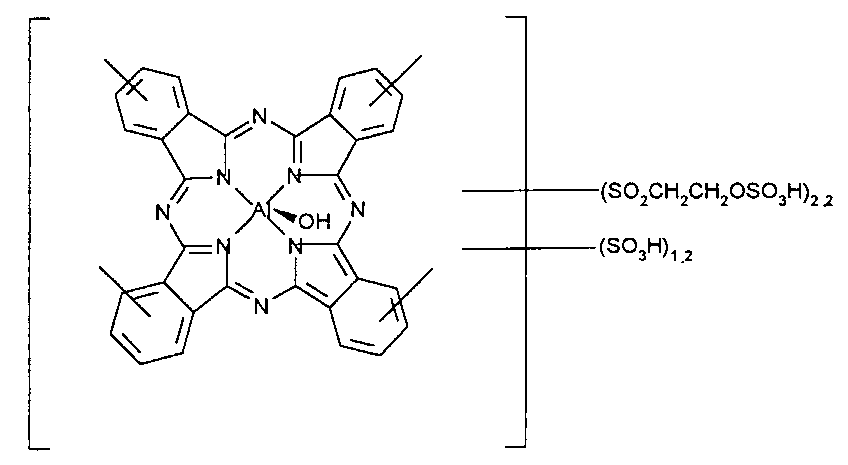

Man erhält ein dunkelgrünes Produkt mit einem Lambdaₘₐₓ = 678 nm. Der Reaktivfarbstoff ist in Wasser gut löslich und gibt auf Baumwollfasern brillante grüne Drucke und Färbungen mit guten Echtheiten.

### Beispiel 5

### Aluminiumphthalocyaninsulfonamidethylsulfinat

180 Teile Aluminiumphthalocyanintrisulfochlorid aus Beispiel 2a werden in 300 Teile Wasser bei 5 bis 10°C eingetragen. Mit Natriumbicarbonat wird ein pH-Wert von 8 eingestellt und bei 10 bis 15°C werden 45 Teile Taurin innerhalb von 5 Minuten zugetropft. Anschließend wird für 3 Stunden bei 40°C erwärmt. Das Reaktionsprodukt wird abgesaugt und mit Natriumchlorid ausgesalzen.
Nach dem Trocknen wird das Produkt in 200 Teile Chlorsulfonsäure eingetragen, wobei die Temperatur nicht über 20°C steigt. Anschließend wird auf 60°C erwärmt und 8 ml Thionylchlorid zugetropft. Unter Rückfluß wird die Temperatur für 1 Stunde bei 80°C gehalten. Nach dem Abkühlen wird das Reaktionsgemisch auf 2000 Teile Eis gegeben, abgesaugt und mit 1500 Teilen 1 n Salzsäure gewaschen. Der feuchte Preßkuchen wird bei 10°C in eine Lösung von 1000 Teilen Wasser und 110 Teilen Natriumsulfit gegeben. Mit Natriumbicarbonat wird ein pH-Wert von 8 bis 8,5 eingestellt. Das Reaktionsgemisch wird 5 Stunden bei 10 bis 15°C, 15 Stunden bei Raumtemperatur und anschließend 30 Minuten bei 40°C gerührt. Nach dem Abkühlen auf Raumtemperatur wird mit 250 Teilen konzentrierter Salzsäure auf pH 1 gestellt und eine Stunde bei Raumtemperatur gerührt. Es wird mit dreimal 500 Teilen 1 N Salzsäure gewaschen. Das feuchte Produkt der Formel 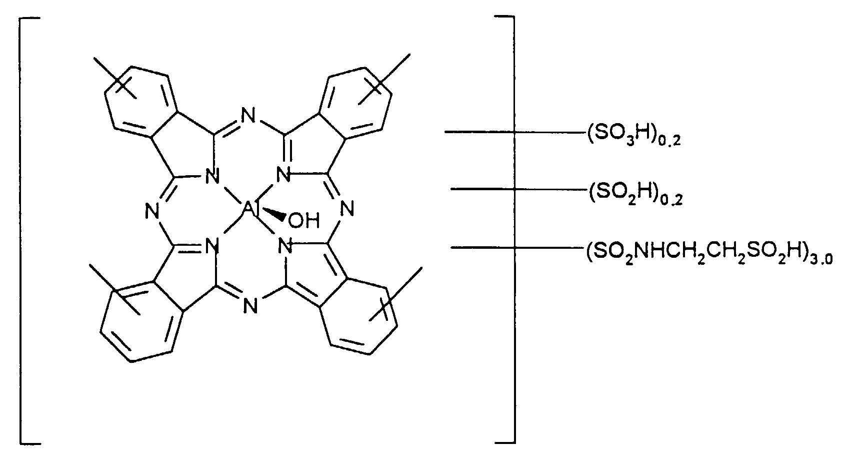 wird direkt für die weitere Umsetzung verwendet.

### Beispiel 6

### Umsetzung mit Chlorethanol und Veresterung

200 Teile Aluminiumphthalocyaninsulfonamidethylsulfinat aus Beispiel 5 werden in 2000 Teile Wasser gegeben und mit 2n NaOH wird ein pH-Wert von 7,3 eingestellt. Dann werden 56,4 Teile 2-Chlorethanol zugetropft und die Temperatur auf 65°C erhöht. Mit 2n Natronlauge wird der pH-Wert während der ganzen Reaktionszeit von 20 Stunden bei 9.5-9.6 gehalten. Anschließend wird mit verd. Salzsäure auf pH 6.8 gestellt und der Niederschlag abgesaugt und getrocknet.
Anschließend werden 100 Teile Hydroxy-Farbstoff in 540 Teile Schwefelsäure-Monohydrat bei 15 bis 20°C eingetragen und bei 20°C für 12 Stunden gerührt. Das Reaktionsgemisch wird auf 2600 Teile Eis gegossen, der Niederschlag abgesaugt und mit insgesamt 2500 ml 5%iger Salzsäure gewaschen. Der Preßkuchen wird in 750 Teile Wasser eingetragen und mit 2n Natronlauge bei einem pH-Wert von 6 gelöst. Der Reaktivfarbstoff wird durch Trocknen im Vakuumschrank oder durch Aussalzen isoliert.

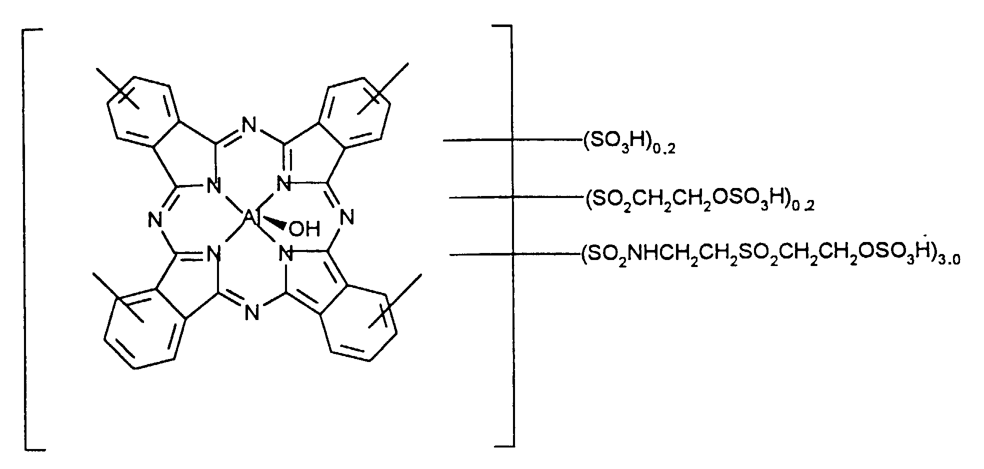

Man erhält ein grünes Produkt mit einem Lambdaₘₐₓ = 670 nm in H₂0. Der Reaktivfarbstoff ist in Wasser gut löslich und gibt auf Baumwollfasern brillante grüne Drucke und Färbungen mit guten Echtheiten.

### Beispiel 7

### Aluminiumphthalocyaninsulfomorpholinosulfinat

180 Teile Aluminiumphthalocyanintrisulfochlorid aus Beispiel 2a werden in 300 Teile Wasser bei 5 bis 10°C eingetragen. Mit Natriumbicarbonat wird ein pH-Wert von 8 eingestellt und bei 10 bis 15°C werden 4,3 Teile Morpholin innerhalb von 5 Minuten zugetropft. Nach 15 Minuten wird das Reaktionsgemisch in eine Lösung von 95 Teilen Natriumsulfit und 28 Teilen Natriumbicarbonat in 1600 Teilen Wasser gegeben. Das Reaktionsgemisch wird 5 Stunden bei 10 bis 15°C, 15 Stunden bei Raumtemperatur und anschließend 30 Minuten bei 40°C gerührt.
Nach dem Abkühlen auf Raumtemperatur wird mit 310 ml HCl konz. auf pH 1 gestellt und eine Stunde bei Raumtemperatur gerührt. Es wird mit dreimal 500 Teilen 1 N Salzsäure gewaschen. Das feuchte Produkt der Formel 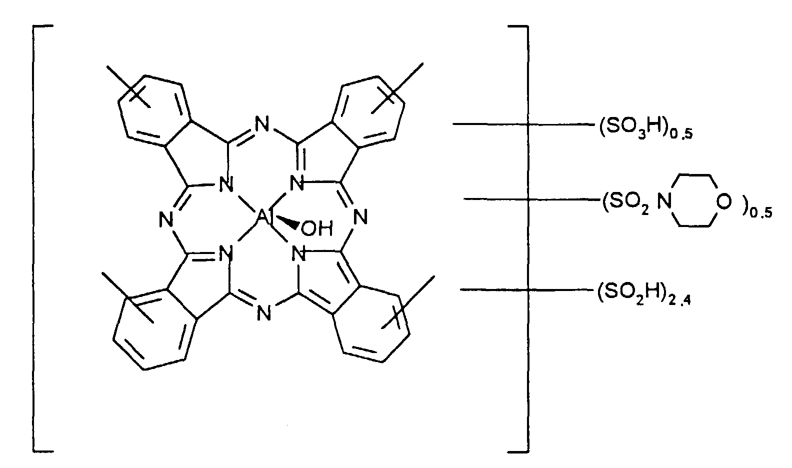 wird direkt für die weitere Umsetzung verwendet.

### Beispiel 8

### Umsetzung mit Chlorethanol und Veresterung

190 Teile Aluminiumphthalocyaninsulfomorpholinosulfinat aus Beispiel 7 werden in 2000 Teile Wasser gegeben und mit 2n NaOH der pH-Wert von 7,3 eingestellt. Dann werden 56,4 Teile 2-Chlorethanol zugetropft und die Temperatur auf 65°C erhöht. Mit 2n Natronlauge wird der pH-Wert während der ganzen Reaktionszeit von 20 Stunden bei 9.5-9.6 gehalten. Anschließend wird mit verd. Salzsäure auf pH 6.8 gestellt und der Niederschlag abgesaugt und getrocknet.
Anschließend werden 91 Teile Hydroxy-Farbstoff in 540 Teile Schwefelsäure-Monohydrat bei 15 bis 20°C eingetragen und bei 20°C für 12 Stunden gerührt. Das Reaktionsgemisch wird auf 2600 Teile Eis gegossen, der Niederschlag abgesaugt und mit insgesamt 2500 ml 5%iger Salzsäure gewaschen. Der Preßkuchen wird in 750 Teile Wasser eingetragen und mit 2n Natronlauge bei einem pH-Wert von 6 gelöst. Der Reaktivfarbstoff wird durch Trocknen im Vakuumschrank oder durch Aussalzen isoliert.

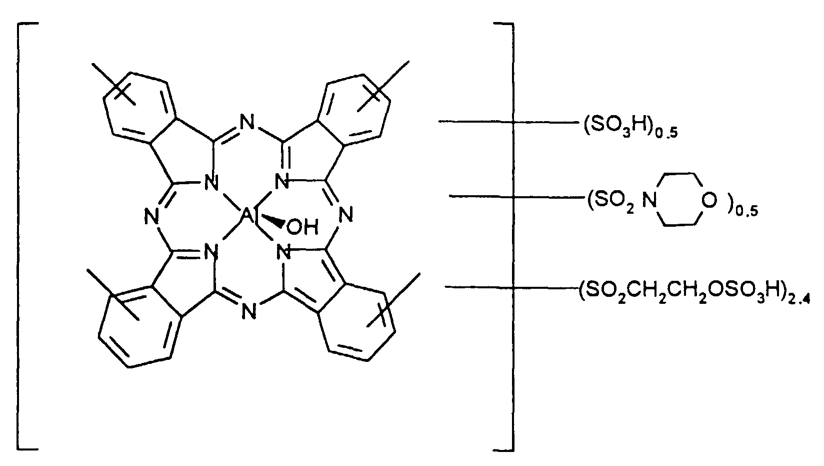

Man erhält ein grünes Produkt mit einem Lambdaₘₐₓ = 672 nm in H₂0. Der Reaktivfarbstoff ist in Wasser gut löslich und gibt auf Baumwollfasern brillante grüne Drucke und Färbungen mit guten Echtheiten.

### Beispiel 9

### Aluminiumphthalocyanin-β-aminoethylsulfon + Cyanurchlorid mit 3-(β-Sulfatoethylsulfonyl)-anilin

Eine Mischung aus 150 Teilen 25%iger Ammoniaklösung und 500 Teilen Wasser wird auf 10°C abgekühlt, und 135 Teile Reaktivfarbstoff aus Beispiel 4b werden innerhalb von 10 Min zugegeben. Nach 1 Stunde wird auf Raumtemperatur erwärmt und mit 2n Salzsäure ein pH-Wert von 6,5 eingestellt. Der Niederschlag wird abgesaugt und mit 5%iger NaCl-Lösung gewaschen. Man erhält ein Produkt der Formel

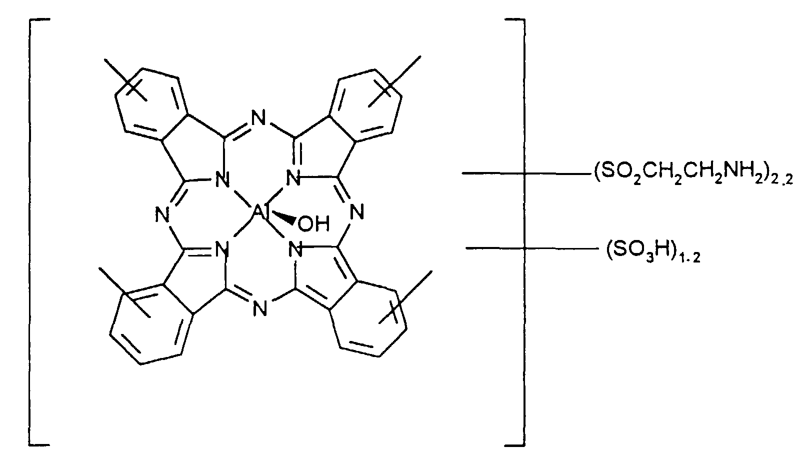

45 Teile Cyanurchlorid werden in 250 Teile Wasser und 250 Teile Eis gegeben und unter Eiskühlung 30 Minuten gerührt. 63 Teile 3-(β-Sulfatoethylsulfonyl)-anilin werden in 250 Teile Wasser gegeben und unter Kühlung bei 5°C mit Natriumbicarbonat bei pH 5 gelöst. Diese Lösung wird in die Suspension von Cyanurchlorid geben. Bei 5°C wird für 2 Stunden gerührt und der pH-Wert mit Natriumcarbonat-Lösung im Bereich von 3 bis 3.5 gehalten. Anschließend wird der feuchte Niederschlag der Aminoethylsulfon-Farbstoffverbindung zugegeben und bei Raumtemperatur für eine Stunde gerührt. Der pH-Wert wird mit Natriumcarbonat auf 6,5 eingestellt. Anschließend wird die Reaktionslösung auf 40°C erwärmt und für 6 Stunden unter Zugabe von Natriumcarbonat der pH-Wert im Bereich von 6 bis 6.5 gehalten. Der Farbstoff wird mit Natriumchlorid ausgesalzen, abgesaugt und mit 5%iger NaCl-Lösung gewaschen.

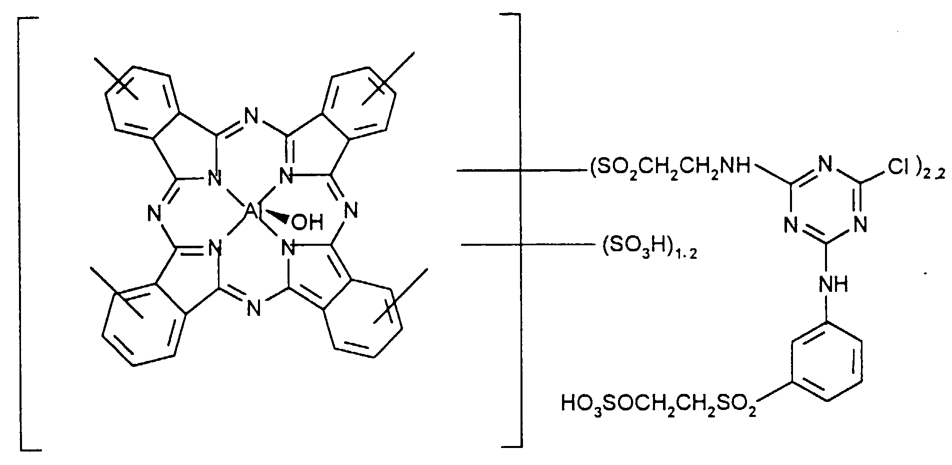

Man erhält ein grünes Produkt mit einem Lambdaₘₐₓ = 675 nm in H₂O. Der Reaktivfarbstoff ist in Wasser gut löslich und gibt auf Baumwollfasern brillante grüne Drucke und Färbungen mit guten Echtheiten.

## Patentansprüche

1. Aluminiumphthalocyanin der Formel (1) 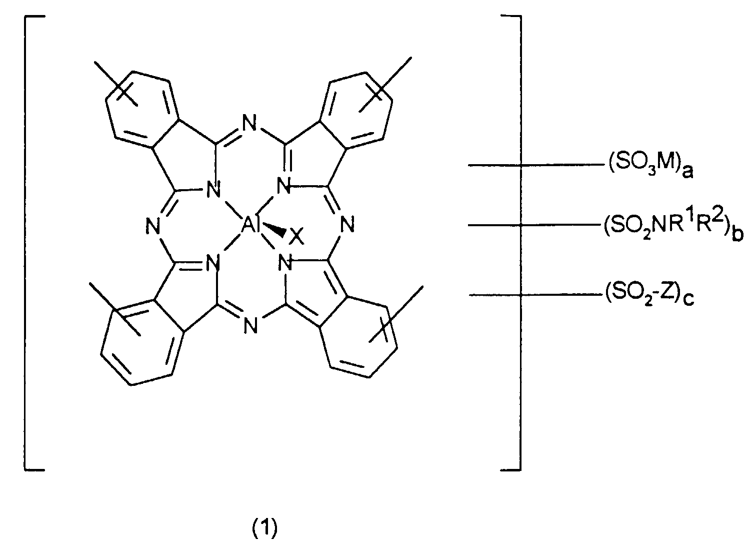 worin
X Cl oder OH;
Z Vinyl oder eine Gruppe der Formel -CH₂CH₂-Y, in der Y einen alkalisch eliminierbaren Substituenten oder die Gruppe Sulfo, Hydroxy oder -NR-T bedeutet, worin T ein faserreaktiver heterocyclischer Rest, und R Wasserstoff, C₁-C₆-Alkyl oder ein mit OH, SO₃M, OSO₃M, COOM, OCH₃ oder OC₂H₅ substituiertes C₁-C₆-Alkyl ist;
a eine Zahl von 0 bis 3;
b eine Zahl von 0 bis 4;
c eine Zahl von 0,5 bis 4;
M Wasserstoff, ein Alkalimetall oder ein substituiertes oder unsubstituiertes Ammoniumion; und
R¹ und R² unabhängig voneinander Wasserstoff, C₁-C₆-Alkyl, ein durch ein bis zwei Reste der Formeln OH, SO₃M oder OSO₃M substituiertes C₁-C₆-Alkyl, Phenyl, ein durch ein bis drei Reste der Formeln OH, SO₃M oder COOM substituiertes Phenyl oder ein Rest der Formeln (2), (3) oder (4) bedeuten 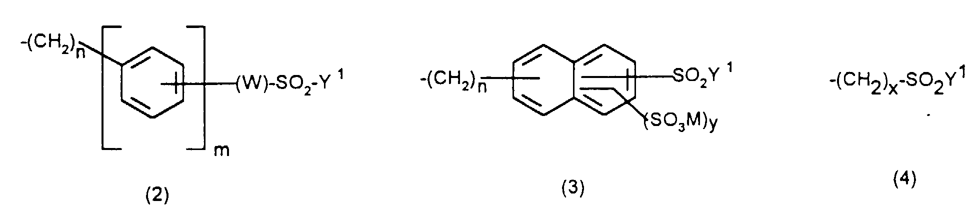 worin
n eine Zahl von 0 bis 3,
m die Zahl 0 oder 1,
wobei die Summe n + m 1,2, 3 oder 4 ist,
x eine ganze Zahl von 2 bis 6,
y eine Zahl von 0 bis 3,
W C₁-C₆-Alkylen, -(CH₂)₂-O-(CH₂)₂- oder eine chemische Bindung,
Y¹ -CH=CH₂, -CH₂CH₂Cl, -CH₂CH₂OH oder -CH₂CH₂OSO₃M sind;
oder R¹ und R² zusammen mit dem benachbarten Stickstoffatom einen 3- bis 9-gliedrigen, gesättigten oder ungesättigten N-Heterocyclus, oder mit einer weiteren Heterogruppe aus der Reihe -O-, -S-, -SO₂-, -N=, -NR³, worin R³ Wasserstoff, C₁-C₄-Alkyl, C₁-C₄-Hydroxyalkyl, C₁-C₄-Chloralkyl oder C₁-C₄-Sulfatoalkyl bedeutet, einen 5- bis 8-gliedrigen, gesättigten oder ungesättigten Heterocyclus bilden.

2. Aluminiumphthalocyanin nach Anspruch 1, dadurch gekennzeichnet, daß Y Chlor, Sulfato, Thiosulfato, Acetato oder Phosphato bedeutet.

3. Aluminiumphthalocyanin nach Anspruch 1 oder 2, dadurch gekennzeichnet, daß
X OH ist;
Z -CH=CH₂, -CH₂CH₂Cl, -CH₂CH₂OSO₃M, -CH₂CH₂SSO₃M, -CH₂CH₂-OCOCH₃, -CH₂CH₂-OPO₃M, -NR-triazinyl oder NR-pyrimidinyl, wobei die Triazinyl- und Pyrimidinyl-Reste durch Halogene, Amino- und/oder Cyanogruppen substituiert sind;
die Summe a + b + c eine Zahl zwischen 2,0 und 4,0 ist;
M Wasserstoff, Lithium, Natrium, Kalium, Ammonium, ein Mono-, Di-, Tri- oder Tetramethylammoniumion, ein Mono-, Di-, Tri- oder Tetraethylammoniumion oder ein Mono-, Di- oder Triethanolammoniumion,
R¹ und R² unabhängig voneinander Wasserstoff, C₁-C₄-Alkyl, C₁-C₄-Sulfoalkyl, C₁-C₄-Sulfatoalkyl, oder zusammen mit dem benachbarten N-Atom einen Heterocyclus der Formeln 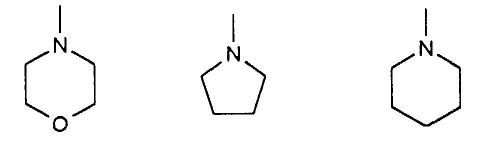 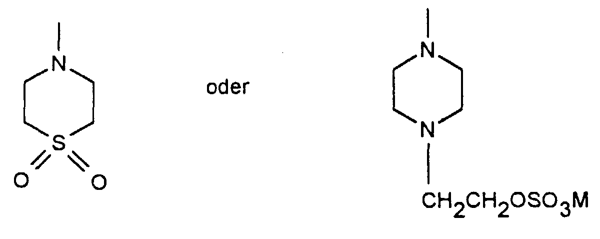 bedeuten.

4. Aluminiumphthalocyanin nach einem oder mehreren der Ansprüche 1 bis 3, dadurch gekennzeichnet, daß
X OH ist;
a eine Zahl von 0 bis 3;
b eine Zahl von 0,5 bis 2,0;
c eine Zahl von 0,5 bis 4,0; und
R¹ und R² unabhängig voneinander H, CH₃, C₂H₅, CH₂CH₂SO₃M, CH₂CH₂OSO₃M sind oder zusammen mit dem benachbarten N-Atom einen Heterocyclus der Formeln 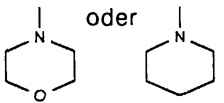 bilden.

5. Aluminiumphthalocyanin nach mindestens einem der Ansprüche 1 bis 4, dadurch gekennzeichnet, daß
X OH ist;
a eine Zahl von 0 bis 3;
b eine Zahl von 0,5 bis 2,0;
c eine Zahl von 0,5 bis 4,0;
R¹ Wasserstoff;
R² einen Rest der Formel (2) oder (4), worin x die Zahl 2, m die Zahl 1, n die Zahl 0, W eine chemische Bindung und Y¹ Vinyl oder β-Sulfatoethyl sind;
Z Vinyl oder β-Sulfatoethyl bedeutet.

6. Aluminiumphthalocyanin nach mindestens einem der Ansprüche 1 bis 3, dadurch gekennzeichnet, daß
X OH ist
a eine Zahl von 0 bis 3;
b die Zahl 0;
c eine Zahl von 0,5 bis 4,0;
Z eine Gruppe der Formel CH₂CH₂NR⁴T¹ ist, worin R⁴ die Bedeutung H, CH₃, C₂H₅, C₃H₇, CH₂CH₂OH, CH₂CH₂SO₃M, CH₂CH₂OSO₃M oder CH₂COOM hat und T¹ einen Rest der Formeln 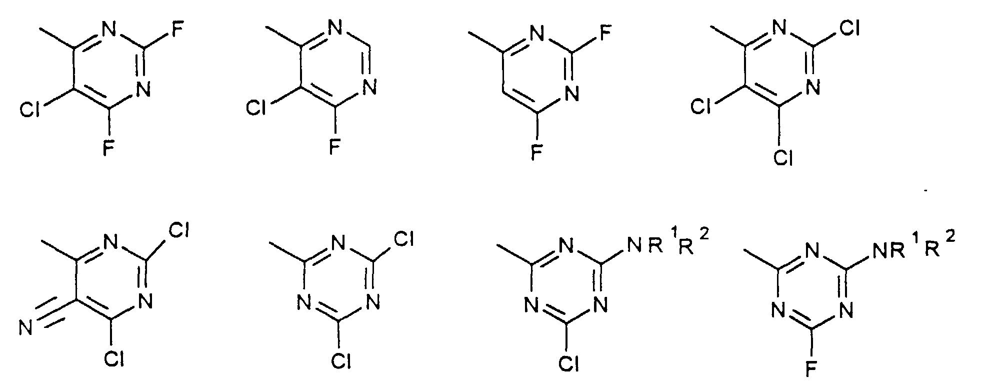 bedeutet.

7. Aluminiumphthalocyanin nach mindestens einem der Ansprüche 1 bis 3, dadurch gekennzeichnet, daß
X OH ist;
a eine Zahl von 0 bis 3;
b die Zahl 0;
c eine Zahl von 0,5 bis 4,0; und
Z Vinyl oder β-Sulfatoethyl bedeutet.

8. Verfahren zur Herstellung einer Verbindung der Formel (1) nach mindestens einem der Ansprüche 1 bis 7, dadurch gekennzeichnet, daß man das Säurechlorid der Formel (5) 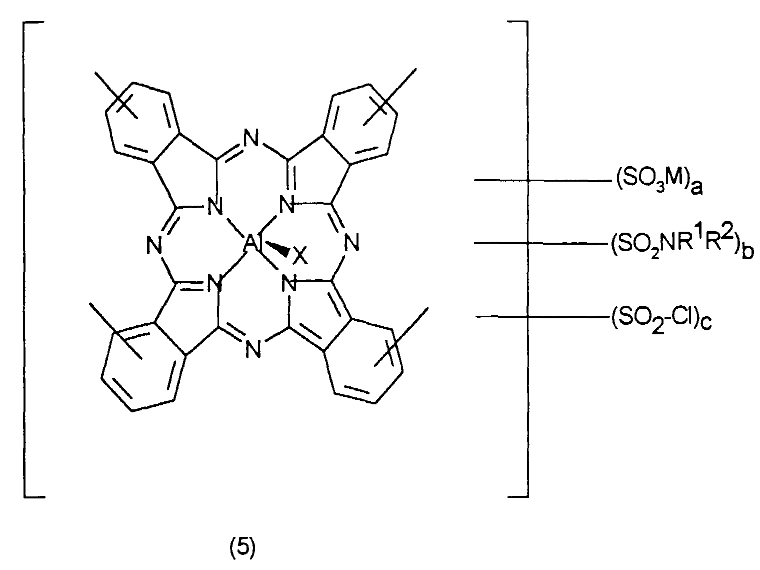 zur Sulfinsäure der Formel (6) reduziert, 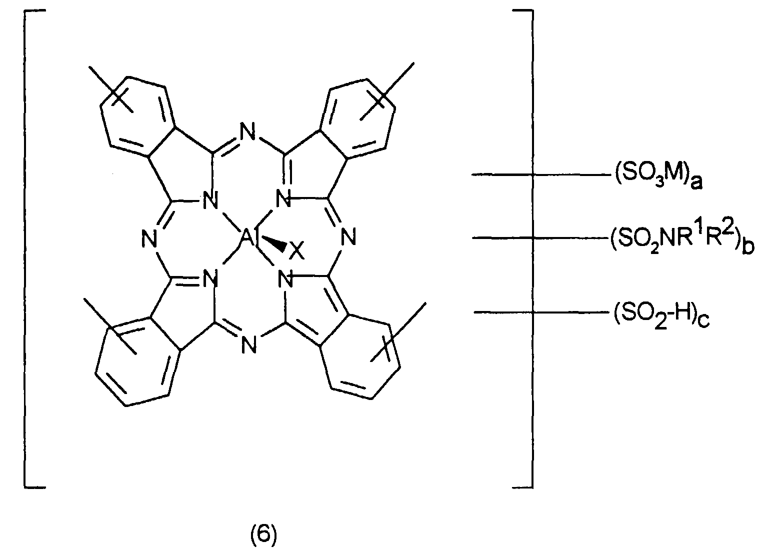 die Verbindung der Formel (6) zur Verbindung der Formel (1a) ethoxyliert 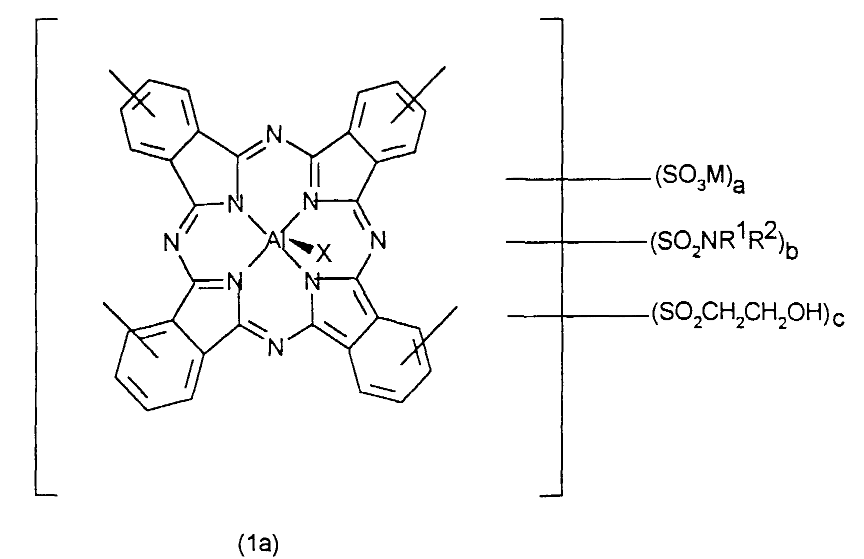 die Verbindung der Formel (1a) gegebenenfalls chloriert, sulfatiert, thiosulfatiert, phosphoryliert oder acetyliert, wobei eine Verbindung der Formel (1) mit Z gleich -CH₂CH₂Cl, -CH₂CH₂OSO₃M, -CH₂CH₂SSO₃M, -CH₂CH₂OPO₃M oder -CH₂COOM entsteht,
die gegebenenfalls einer Eliminierungsreaktion unterworfen wird, wobei eine Verbindung der Formel (1) mit Z gleich Vinyl entsteht,
gegebenenfalls eine Verbindung der Formel (1) mit Z gleich Vinyl, β-Sulfatoethyl, β-Thiosulfatoethyl, β-Phosphatoethyl oder β-Acetatoethyl mit einem Amin der Formel H₂NR umsetzt, wobei eine Verbindung der Formel (1) mit Z gleich -CH₂CH₂NHR entsteht, welche nach ihrer Zwischenisolierung mit einer heterocyclischen Verbindung der Formel Hal-T mit Hal gleich Chlor oder Fluor umgesetzt wird, wobei eine Verbindung der Formel (1) mit Z gleich -CH₂CH₂NR-T entsteht;
oder zur Herstellung einer Verbindung der Formel (1) mit Z gleich -CH₂CH₂SO₃M, entweder eine Verbindung der Formel (6) mit 1-Chlorethan-2-sulfonsäure umgesetzt wird, oder eine Verbindung der Formel (1) mit Z gleich Vinyl mit M₂SO₃, bevorzugt Na₂SO₃, umgesetzt wird.

9. Verfahren zur Herstellung einer Verbindung der Formel (1) nach mindestens einem der Ansprüche 1 bis 7, dadurch gekennzeichnet, daß man eine Verbindung der Formel (7) 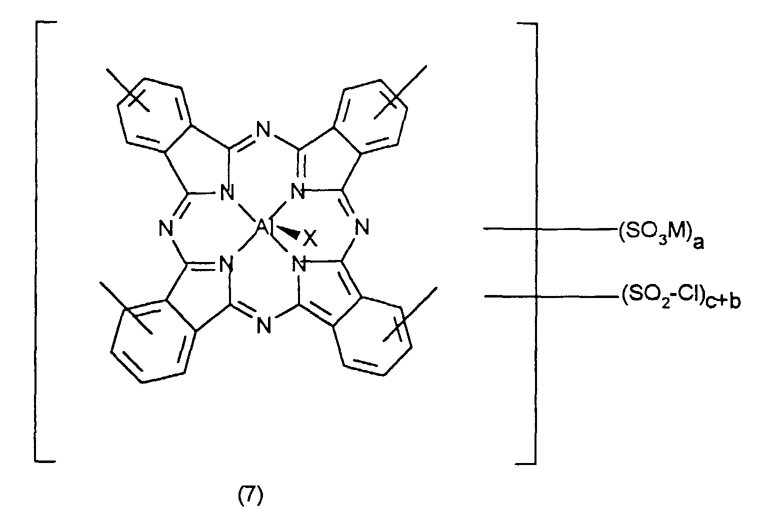 mit einer der gewünschten Zahl c entsprechenden stöchiometrischen Menge eines Reduktionsmittels teilweise zur Sulfinsäure reduziert und anschließend mit einem Amin der Formel HNR¹R² umsetzt, wobei eine Verbindung der Formel (6) 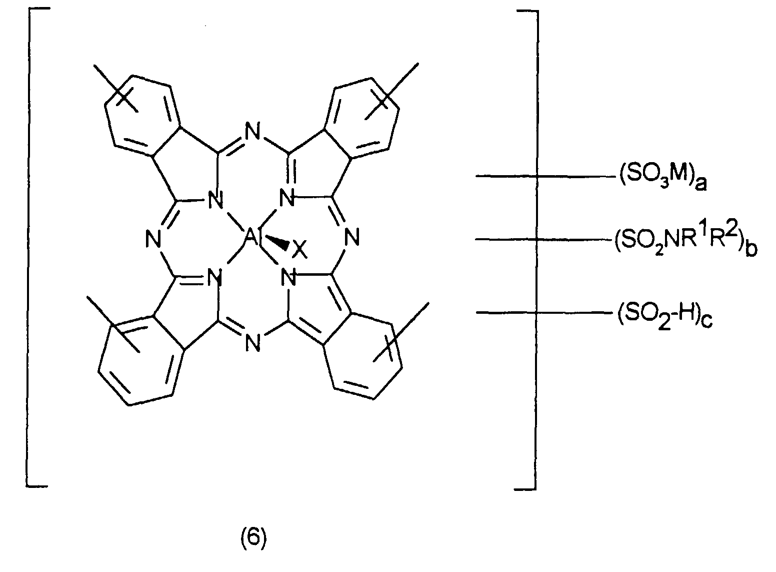 entsteht, die dann wie in Anspruch 8 beschrieben, weiter umgesetzt wird.

10. Verfahren zur Herstellung einer Verbindung der Formel (1) nach mindestens einem der Ansprüche 1 bis 7, dadurch gekennzeichnet, daß man eine Verbindung der Formel (7) 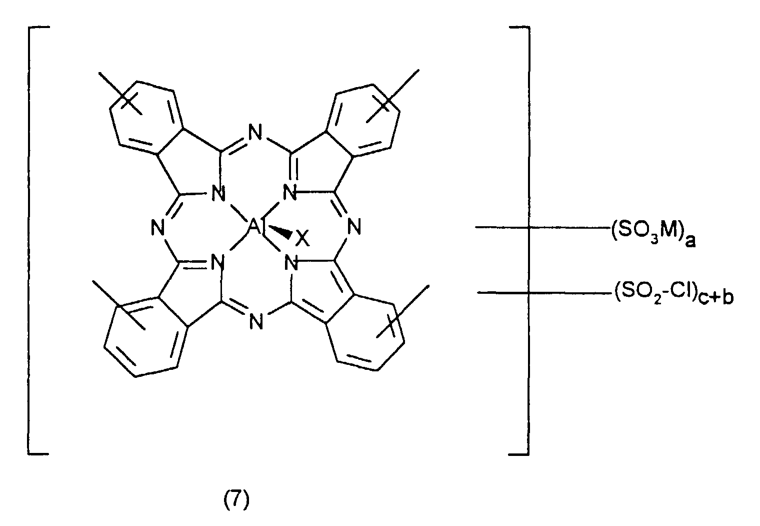 mit einer der gewünschten Zahl b entsprechenden stöchiometrischen Menge eines Amins der Formel HNR¹R² umsetzt und die entstehende Verbindung der Formel (5), wie in Anspruch 8 beschrieben, weiter umsetzt.

11. Verfahren zur Herstellung einer Verbindung der Formel (1b) 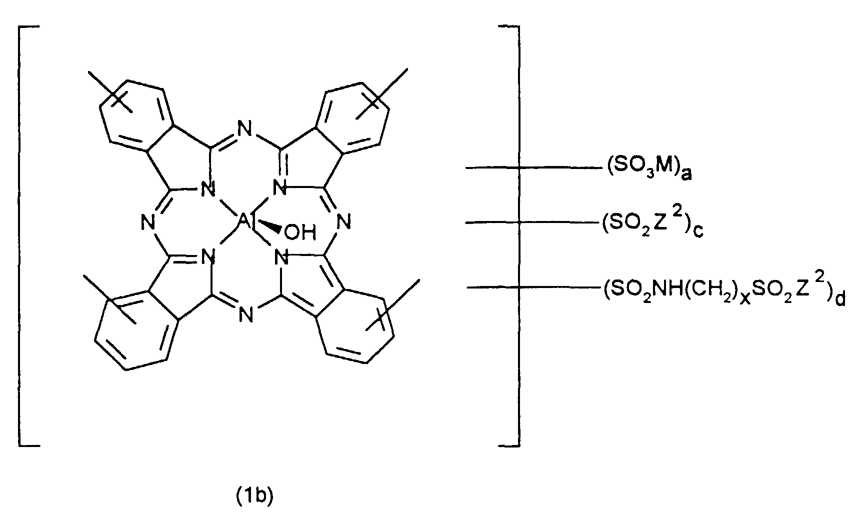 worin
a eine Zahl von 0 bis 3,0;
c eine Zahl von 0,5 bis 4,0;
d eine Zahl von 0,5 bis 2,0;
x eine Zahl von 2 bis 6, bevorzugt 2;
Z² Vinyl oder β-Sulfatoethyl bedeuten und
M Wasserstoff, ein Alkalimetall oder ein substituiertes oder unsubstituiertes Ammoniumion bedeuten, dadurch gekennzeichnet, daß man eine Verbindung der Formel (7a) 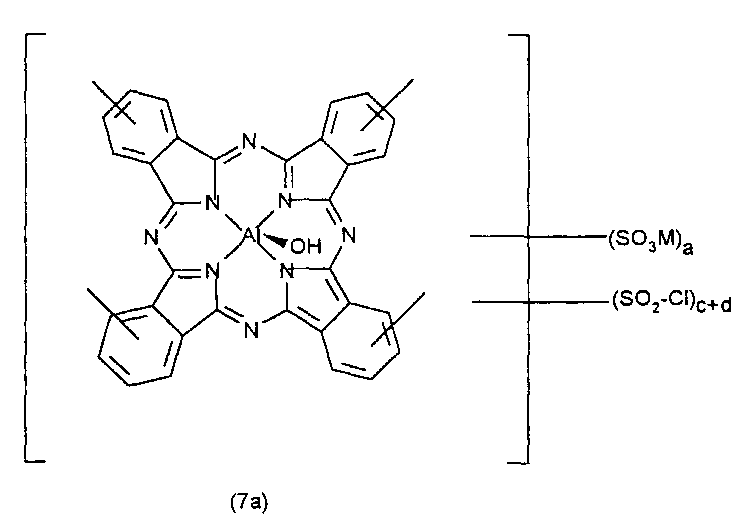 mit einer der gewünschten Zahl d entsprechenden stöchiometrischen Menge einer Alkylaminosulfonsäure der Formel H₂N-(CH₂)ₓ-SO₃M unter alkalischen Bedingungen zu einer Verbindung der Formel (8), 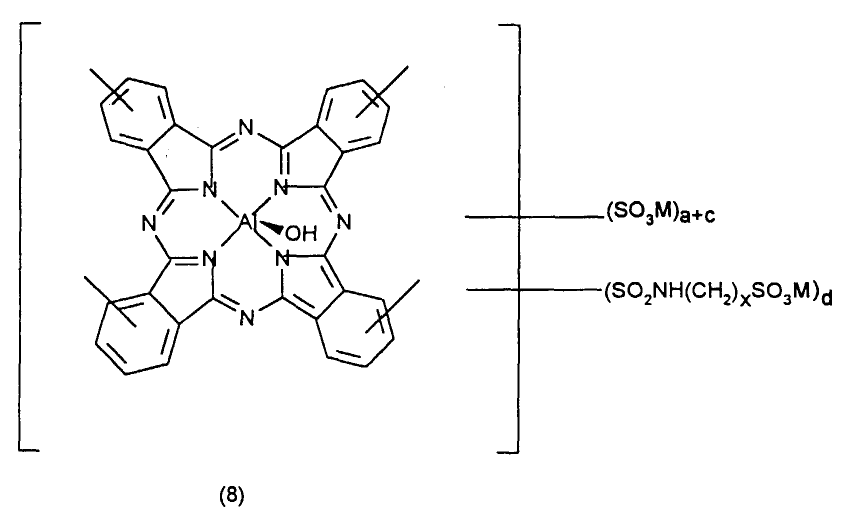 wobei die der Zahl c entsprechenden SO₂Cl-Gruppen verseift werden, umsetzt, die Verbindung der Formel (8) mit Chlorsulfonsäure und Thionylchlorid umsetzt,
wobei die Sulfogruppen des Sulfonamidalkylrests und teilweise die direkt am Phthalocyaninchromophor gebundenen Sulfogruppen in SO₂Cl-Gruppen überführt werden; das so entstandene Reaktionsprodukt mit einem Reduktionsmittel reduziert, wobei aus den SO₂Cl-Gruppen Sulfinsäuregruppen entstehen; das so entstandene Reaktionsprodukt ethoxyliert, wobei die Sulfinsäurereste in Hydroxyethylsulfonylreste überführt wund anschließend sulfatiert, wobei Verbindungen der Formel (1b) mit Z² gleich β-Sulfatoethyl entstehen, die gegebenenfalls zu Verbindungen der Formel (1b) mit Z² gleich Vinyl eliminiert werden.

12. Verwendung eines Aluminiumphthalocyanins der Formel (1) gemäß einem oder mehreren der Ansprüche 1 bis 7 zum Färben und Bedrucken von hydroxy- und/oder carbonamidgruppenhaltigem Material, bevorzugt cellulosehaltigem Fasermaterial.

## Claims

1. An aluminum phthalocyanine of the formula (1) 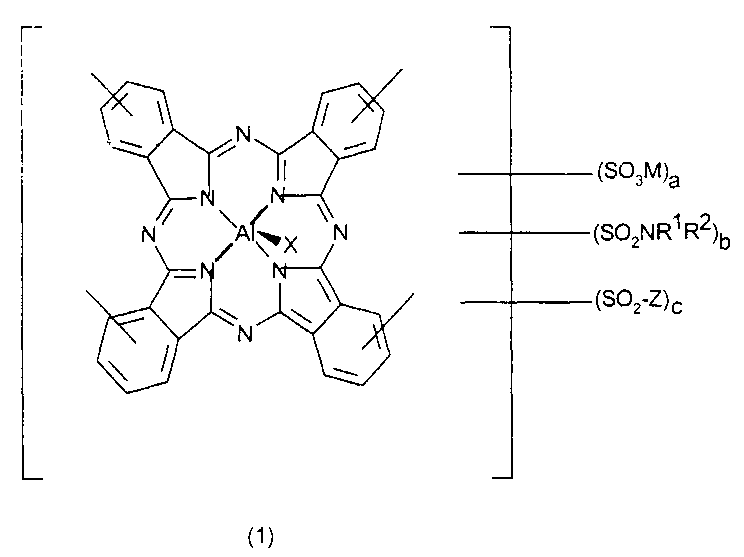 in which
X is Cl or OH;
Z is vinyl or a group of the formula -CH₂CH₂-Y, in which Y is a substituent which can be eliminated under alkaline conditions or the group sulfo, hydroxyl or -NR-T, in which T is a fiber-reactive heterocyclic radical and R is hydrogen, C₁-C₆-alkyl or a C₁-C₆-alkyl which is substituted by OH, SO₃M, OSO₃M, COOM, OCH₃ or OC₂H₅;
a is a number from 0 to 3;
b is a number from 0 to 4;
c is a number from 0.5 to 4;
M is hydrogen, an alkali metal or a substituted or unsubstituted ammonium ion; and
R¹ and R² independently of one another are hydrogen, C₁-C₆-alkyl, a C₁-C₆-alkyl which is substituted by one or two radicals of the formulae OH, SO₃M or OSO₃M, phenyl, a phenyl which is substituted by one to three radicals of the formulae OH, SO₃M or COOM or a radical of the formulae (2), (3) or (4) 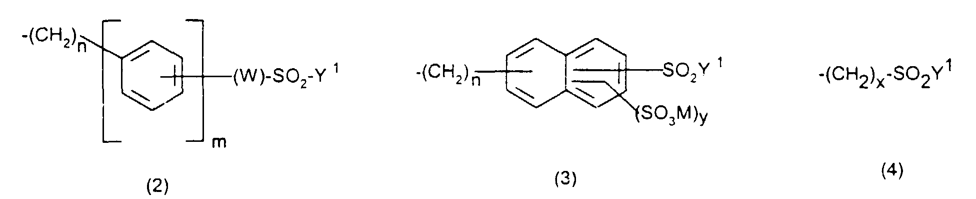 in which
n is a number from 0 to 3,
m is the number 0 or 1,
where the sum n + m is 1,2, 3 or 4,
x is an integer from 2 to 6,
y is a number from 0 to 3,
W is C₁-C₆-alkylene, -(CH₂)₂-O-(CH₂)₂- or a chemical bond and
Y¹ is -CH=CH₂, -CH₂CH₂Cl, -CH₂CH₂OH or -CH₂CH₂OSO₃M;
or R¹ and R², together with the adjacent nitrogen atom, form a 3- to 9-membered saturated or unsaturated N-heterocyclic radical, or, with a further hetero group from the series consisting of -O-, -S-, -SO₂-, -N= and -NR³, in which R³ is hydrogen, C₁-C₄-alkyl, C₁-C₄-hydroxyalkyl, C₁-C₄-chloroalkyl or C₁-C₄-sulfatoalkyl, form a 5- to 8-membered saturated or unsaturated heterocyclic radical.

2. An aluminum phthalocyanine as claimed in claim 1, in which Y is chlorine, sulfato, thiosulfato, acetato or phosphato.

3. An aluminum phthalocyanine as claimed in claim 1 or 2, in which
X is OH;
Z is -CH=CH₂, -CH₂CH₂Cl, -CH₂CH₂OSO₃M, -CH₂CH₂SSO₃M, -CH₂CH₂-OCOCH₃, -CH₂CH₂-OPO₃M, -NR-triazinyl or NR-pyrimidinyl, in which the triazinyl and pyrimidinyl radicals are substituted by halogens, amino groups and/or cyano groups;
the sum a + b + c is a number between 2.0 and 4.0;
M is hydrogen, lithium, sodium, potassium, ammonium, a mono-, di-, tri- or tetramethylammonium ion, a mono-, di-, tri- or tetraethylammonium ion or a mono-, di- or triethanolammonium ion and
R¹ and R² independently of one another are hydrogen, C₁-C₄-alkyl, C₁-C₄-sulfoalkyl or C₁-C₄-sulfatoalkyl, or, together with the adjacent N atom, are a heterocyclic radical of the formulae

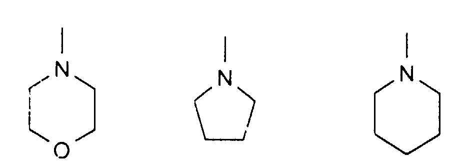

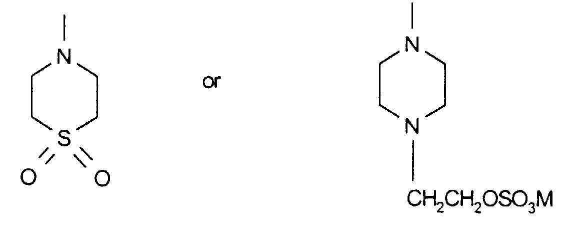

4. An aluminum phthalocyanine as claimed in one or more of claims 1 to 3, in which
X is OH;
a is a number from 0 to 3;
b is a number from 0.5 to 2.0;
c is a number from 0.5 to 4.0; and
R¹ and R² independently of one another are H, CH₃, C₂H₅, CH₂CH₂SO₃M or CH₂CH₂OSO₃M, or, together with the adjacent N atom, form a heterocyclic radical of the formulae

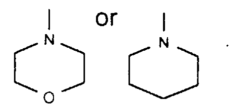

5. An aluminum phthalocyanine as claimed in at least one of claims 1 to 4, in which
X is OH;
a is a number from 0 to 3;
b is a number from 0.5 to 2.0;
c is a number from 0.5 to 4.0;
R¹ is hydrogen;
R² is a radical of the formula (2) or (4), in which x is the number 2, m is the number 1, n is the number 0, W is a chemical bond and Y¹ is vinyl or β-sulfatoethyl and
Z is vinyl or β-sulfatoethyl.

6. An aluminum phthalocyanine as claimed in at least one of claims 1 to 3, in which
X is OH;
a is a number from 0 to 3;
b is the number 0;
c is a number from 0.5 to 4.0;
Z is a group of the formula CH₂CH₂NR⁴T¹, in which R⁴ is H, CH₃, C₂H₅, C₃H₇, CH₂CH₂OH, CH₂CH₂SO₃M, CH₂CH₂OSO₃M or CH₂COOM and T¹ is a radical of the formulae

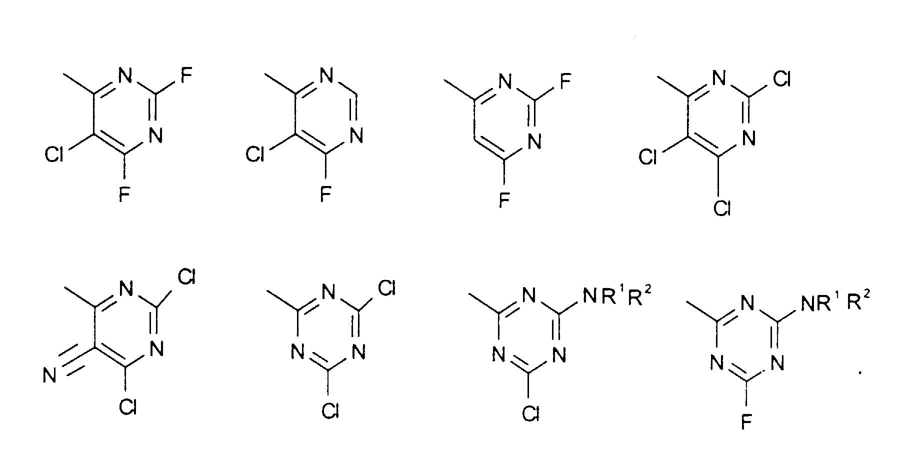

7. An aluminum phthalocyanine as claimed in at least one of claims 1 to 3, in which
X is OH;
a is a number from 0 to 3;
b is the number 0;
c is a number from 0.5 to 4.0; and
Z is vinyl or β-sulfatoethyl.

8. A process for the preparation of a compound of the formula (1) as claimed in at least one of claims 1 to 7, which comprises reducing the acid chloride of the formula (5) 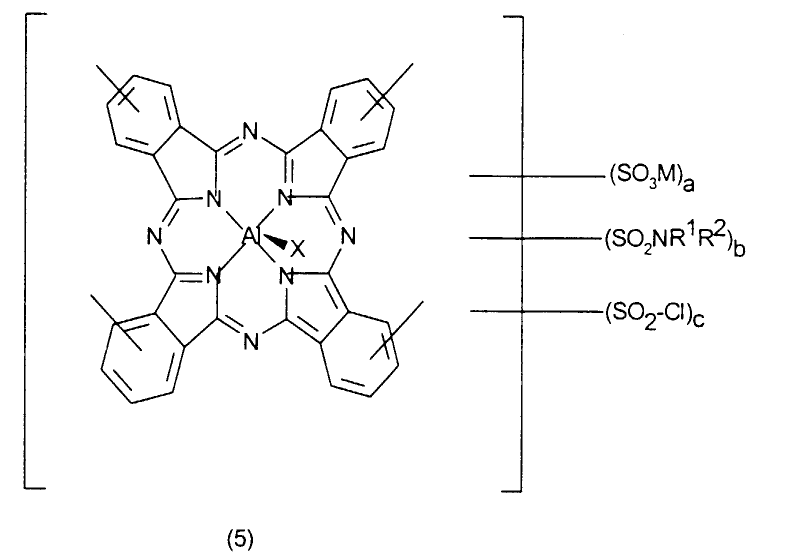 to the sulfinic acid of the formula (6) 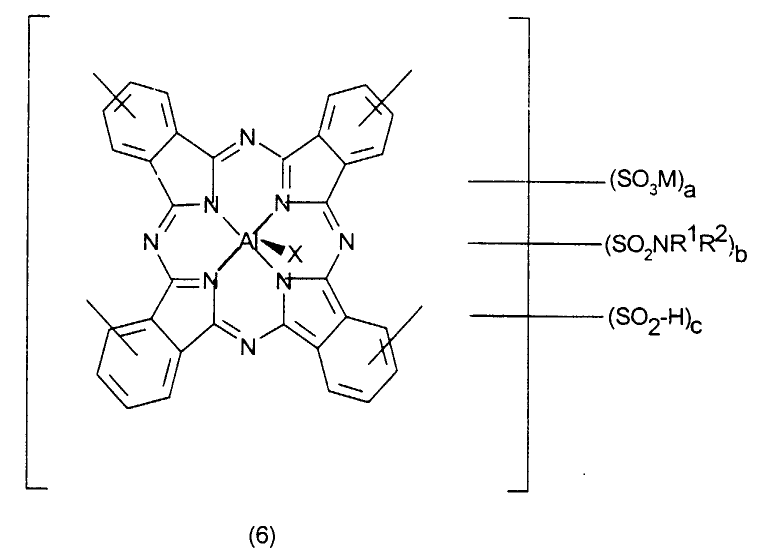 ethoxylating the compound of the formula (6) to give the compound of the formula (1a) 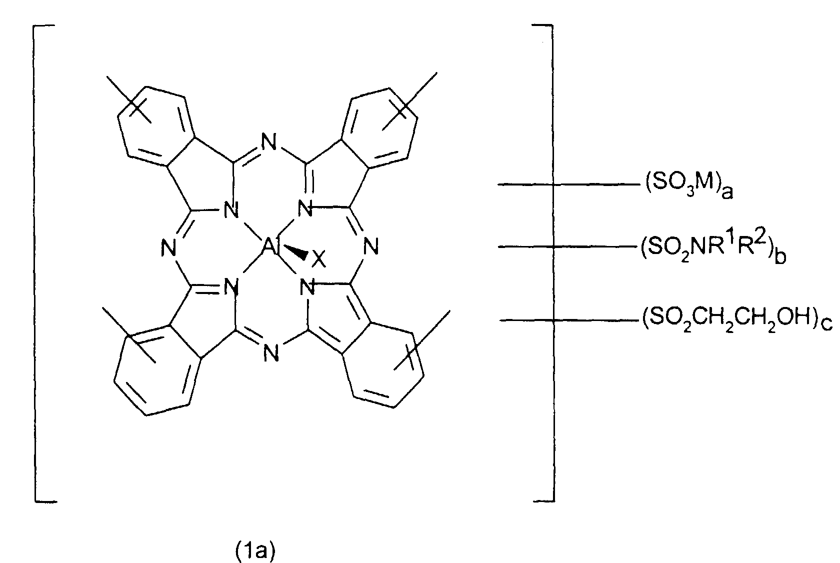 and if appropriate chlorinating, sulfating, thiosulfating, phosphorylating or acetylating the compound of the formula (1a), a compound of the formula (1) where Z is -CH₂CH₂Cl, -CH₂CH₂OSO₃M, -CH₂CH₂SSO₃M, -CH₂CH₂OPO₃M or -CH₂COOM being formed,
which, if appropriate, is subjected to an elimination reaction, a compound of the formula (1) where Z is vinyl being formed,
if appropriate reacting a compound of the formula (1) where Z is vinyl, β-sulfatoethyl, β-thiosulfatoethyl, β-phosphatoethyl or β-acetatoethyl with an amine of the formula H₂NR, a compound of the formula (1) where Z is -CH₂CH₂NHR being formed, which, after its intermediate isolation, is reacted with a heterocyclic compound of the formula Hal-T, where Hal is chlorine or fluorine, a compound of the formula (1) where Z is -CH₂CH₂NR-T being formed;
or, to prepare a compound of the formula (1) where Z is -CH₂CH₂SO₃M, either reacting a compound of the formula (6) with 1-chloroethane-2-sulfonic acid, or reacting a compound of the formula (1) where Z is vinyl with M₂SO₃, preferably Na₂SO₃.

9. A process for the preparation of a compound of the formula (1) as claimed in at least one of claims 1 to 7, which comprises partly reducing a compound of the formula (7) 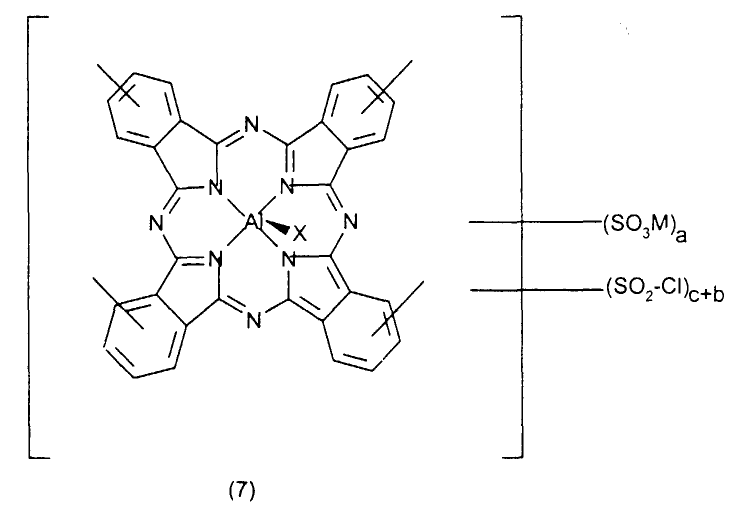 with a stoichiometric amount, corresponding to the desired number c, of a reducing agent to give the sulfinic acid and then reacting this with an amine of the formula HNR¹R², a compound of the formula (6) 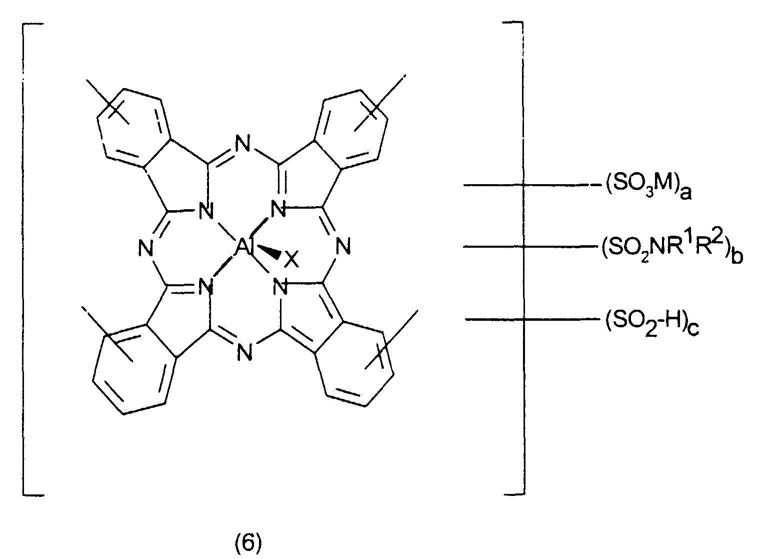 being formed, which is then further reacted as described in claim 8.

10. A process for the preparation of a compound of the formula (1) as claimed in at least one of claims 1 to 7, which comprises reacting a compound of the formula (7) 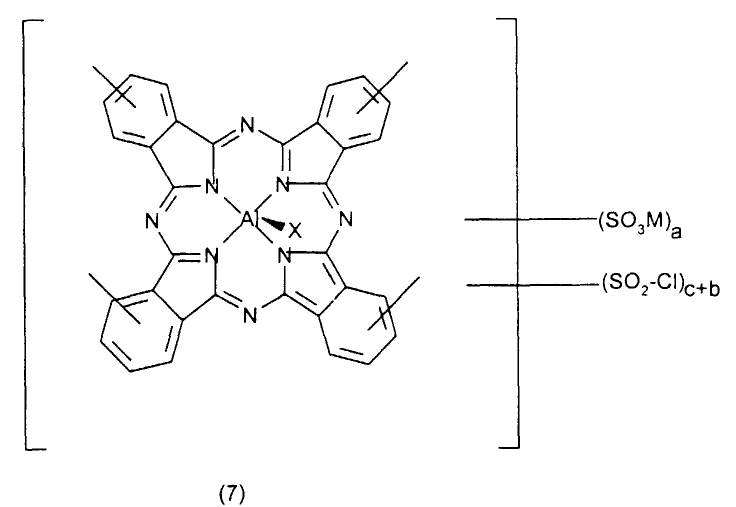 with a stoichiometric amount, corresponding to the desired number b, of an amine of the formula HNR¹R² and further reacting the compound of the formula (5) formed as described in claim 8.

11. A process for the preparation of a compound of the formula (1 b) 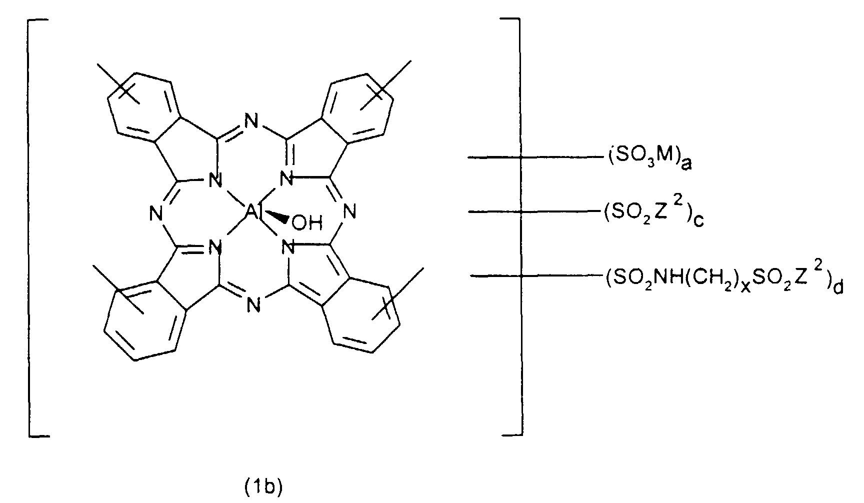 in which
a is a number from 0 to 3.0;
c is a number from 0.5 to 4.0;
d is a number from 0.5 to 2.0;
x is a number from 2 to 6, preferably 2;
Z² is vinyl or β-sulfatoethyl and
M is hydrogen, an alkali metal or a substituted or unsubstituted ammonium ion, which comprises reacting a compound of the formula (7a) 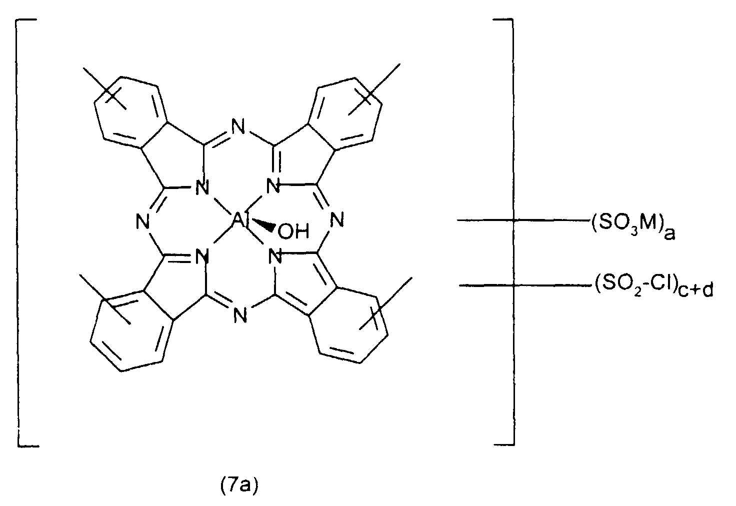 with a stoichiometric amount, corresponding to the desired number d, of an alkylaminosulfonic acid of the formula H₂N-(CH₂)ₓ-SO₃M under alkaline conditions to give a compound of the formula (8), 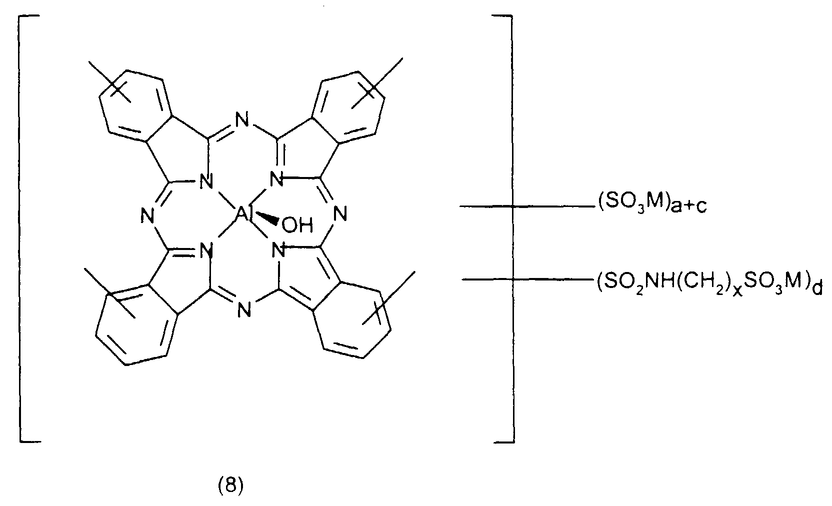 the SO₂Cl groups corresponding to the number c being hydrolyzed, reacting the compound of the formula (8) with chlorosulfonic acid and thionyl chloride, the sulfo groups of the sulfonamidoalkyl radical and some of the sulfo groups bonded directly to the phthalocyanine chromophore being converted into SO₂Cl groups; reducing the resulting reaction product with a reducing agent, sulfinic acid groups being formed from the SO₂Cl groups; ethoxylating the resulting reaction product, the sulfinic acid radicals being converted into hydroxyethylsulfonyl radicals; and subsequently sulfating the product, a compound of the formula (1 b) where Z² is β-sulfatoethyl being formed, which, if appropriate, is subjected to an elimination reaction to give a compound of the formula (1 b) where Z² is vinyl.

12. The use of an aluminum phthalocyanine of the formula (1) as claimed in one or more of claims 1 to 7 for dyeing and printing material containing hydroxyl and/or carboxamide groups, preferably cellulosic fiber material.

## Revendications

1. Phtalocyanine à l'aluminium de formule (1) 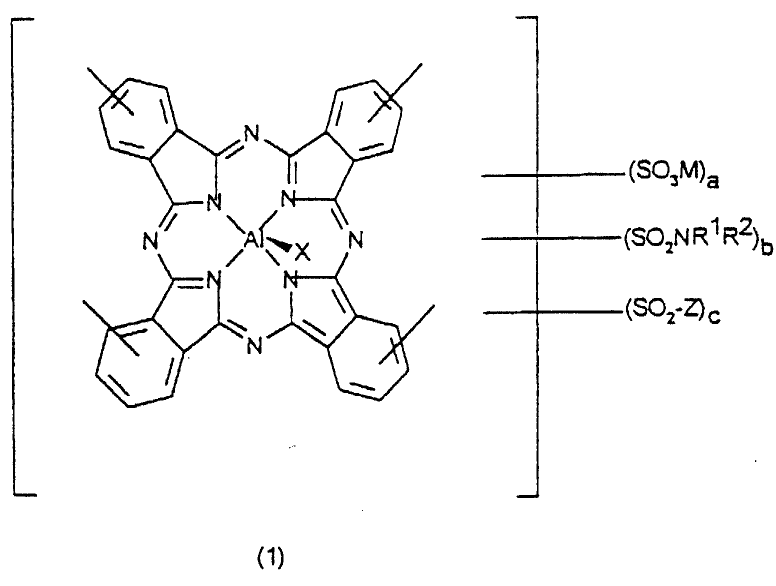 dans laquelle
X est Cl ou OH ;
Z représente un vinyle ou un groupe de formule -CH₂CH₂-Y, dans laquelle Y représente un substituant pouvant être éliminé en milieu alcalin ou le groupe sulfo, hydroxy ou -NR-T, où T est un radical hétérocyclique réactif vis-à-vis des fibres, et R est un hydrogène, un alkyle en C₁-C₆ ou un alkyle en C₁-C₆ substitué par OH, SO₃M, OSO₃M, COOM, OCH₃ ou OC₂H₅ ;
a est un nombre de 0 à 3 ;
b est un nombre de 0 à 4 ;
c est un nombre de 0,5 à 4 ;
M représente un hydrogène, un métal alcalin ou un ion ammonium substitué ou non substitué ; et
R¹ et R² représentent, indépendamment l'un de l'autre un hydrogène, un alkyle en C₁-C₆, un alkyle en C₁-C₆ substitué par un à deux radicaux de formules OH, SO₃M ou OSO₃M, un phényle, un phényle substitué par un à trois radicaux de formules OH, SO₃M ou COOM, ou un radical de formules (2), (3) ou (4) 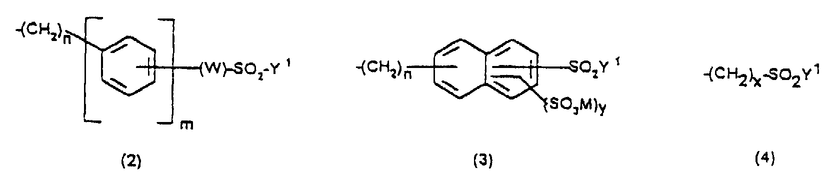 dans lesquelles
n est un nombre de 0 à 3,
m est le nombre 0 ou 1,
la somme n + m valant 1,2,3 ou 4,
x est un entier de 2 à 6,
y est un nombre de 0 à 3,
W représente un alkylène en C₁-C₆, -(CH₂)₂-O-(CH₂)₂- ou une liaison chimique,
Y¹ est -CH=CH₂, -CH₂CH₂Cl, -CH₂CH₂OH ou -CH₂CH₂OSO₃M ;
ou R¹ et R² forment conjointement avec l'atome d'azote voisin, un N-hétérocycle à 3 à 9 chaînons, saturé ou insaturé, ou avec un autre hétérogroupe parmi la série -O-, -S-, -SO₂-, -N=, -NR³, où R³ représente un hydrogène, un alkyle en C₁-C₄, un hydroxyalkyle en C₁-C₄, un chloroalkyle en C₁-C₄ ou un sulfatoalkyle en C₁-C₄, un hétérocycle à 5 à 8 chaînons, saturé ou insaturé.

2. Phtalocyanine à l'aluminium selon la revendication 1, caractérisée en ce que Y représente un chlore, un sulfato, un thiosulfato, un acétato ou un phosphato.

3. Phtalocyanine à l'aluminium selon la revendication 1 ou 2, caractérisée en ce que
X est OH ;
Z est -CH=CH₂, -CH₂CH₂Cl, -CH₂CH₂OSO₃M, -CH₂CH₂SSO₃M, -CH₂CH₂-OCOCH₃, -CH₂CH₂-OPO₃M, un -NR-triazinyle ou un NR-pyrimidinyle, les radicaux triazinyle et pyrimidinyle étant substitués par des halogènes, des groupes amino et/ou cyano ;
la somme a + b + c est un nombre compris entre 2,0 et 4,0 ;
M représente un hydrogène, un lithium, un azote, un potassium, un ammonium, un ion mono-, di-, tri- ou tétraméthylammonium, un ion mono-, di-, tri- ou tétraéthylammonium ou un ion mono-, di- ou triéthanolammonium,
R¹ et R² représentent, indépendamment l'un de l'autre, un hydrogène, un alkyle en C₁-C₄, un sulfoalkyle en C₁-C₄, un sulfatoalkyle en C₁-C₄, ou conjointement avec l'atome N voisin, un hétérocycle de formules

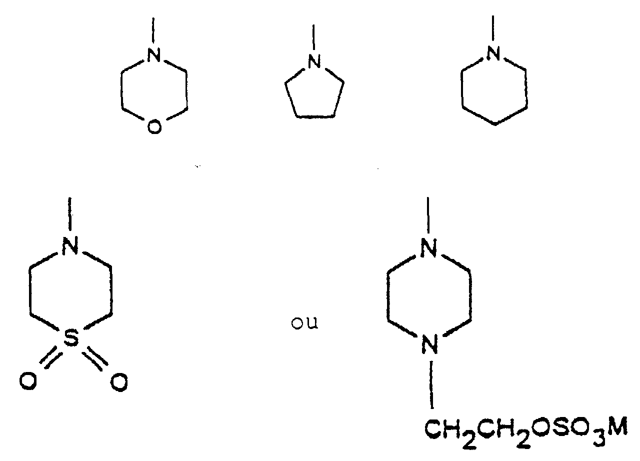

4. Phtalocyanine à l'aluminium selon l'une ou plusieurs des revendications 1 à 3, caractérisée en ce que
X est OH ;
a est un nombre de 0 à 3 ;
b est un nombre de 0,5 à 2,0 ;
c est un nombre de 0,5 à 4,0 ; et
R¹ et R² sont, indépendamment l'un de l'autre, H, CH₃, C₂H₅, CH₂CH₂SO₃M, CH₂CH₂OSO₃M ou forment, conjointement avec l'atome N voisin, un hétérocycle de formules

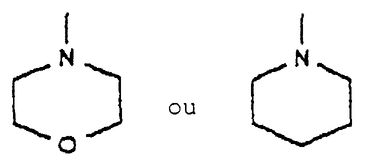

5. Phtalocyanine à l'aluminium selon au moins l'une des revendications 1 à 4, caractérisée en ce que
X est OH ;
a est un nombre de 0 à 3 ;
b est un nombre de 0,5 à 2,0 ;
c est un nombre de 0,5 à 4,0 ;
R¹ représente un hydrogène ;
R² représente un radical de formules (2) ou (4), dans lesquelles x est le nombre 2, m est le nombre 1, n est le nombre 0, W est une liaison chimique et Y¹ est un vinyle ou β-sulfatoéthyle ;
Z représente un vinyle ou un β-sulfatoéthyle.

6. Phtalocyanine à l'aluminium selon au moins l'une des revendications 1 à 3, caractérisée en ce que
X est OH ;
a est un nombre de 0 à 3 ;
b est le nombre 0 ;
c est un nombre de 0,5 à 4,0 ;
Z est un groupe de formule CH₂CH₂NR⁴T¹, dans laquelle R⁴ est H, CH₃, C₂H₅, C₃H₇, CH₂CH₂OH, CH₂CH₂SO₃M, CH₂CH₂OSO₃M, ou CH₂COOM, et T¹ représente un radical de formules

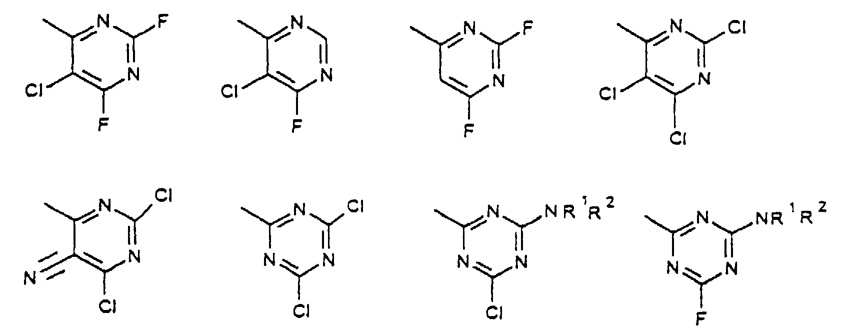

7. Phtalocyanine à l'aluminium selon au moins l'une des revendications 1 à 3, caractérisée en ce que
X est OH ;
a est un nombre de 0 à 3 ;
b est le nombre 0 ;
c est un nombre de 0,5 à 4,0 ; et
Z représente un vinyle ou un β-sulfatoéthyle.

8. Procédé de préparation d'un composé de formule (1) selon au moins l'une des revendications 1 à 7, caractérisé en ce que le chlorure d'acide de formule (5) 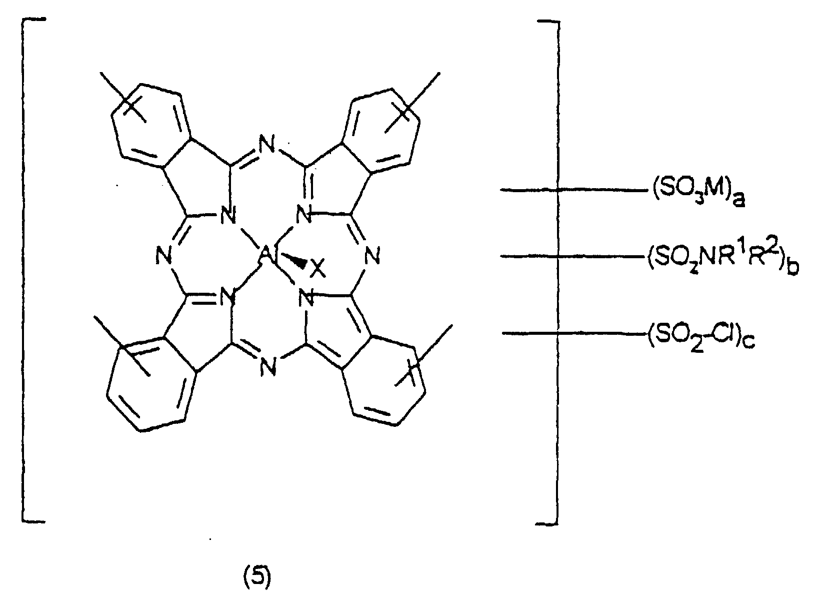 est réduit en acide sulfinique de formule (6), 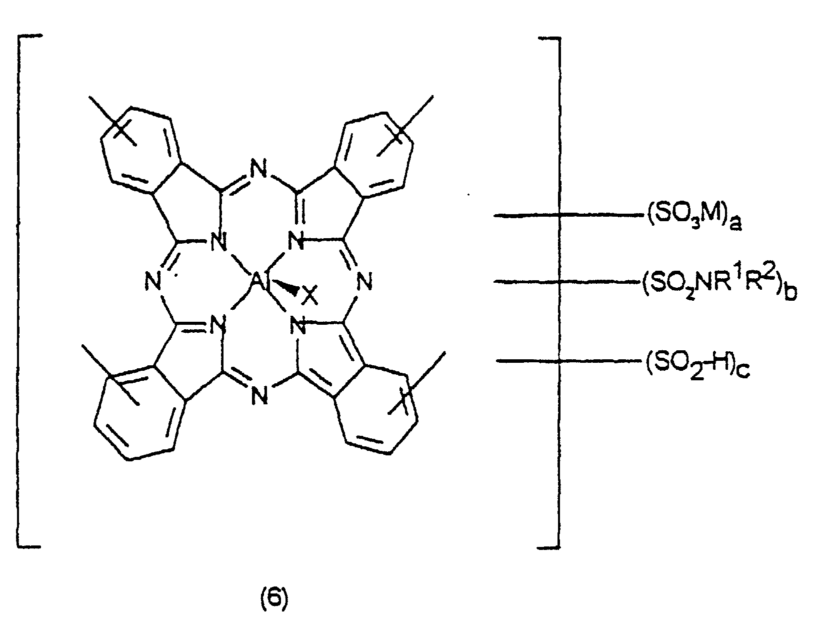 le composé de formule (6) est éthoxylé pour donner le composé de formule (1a) 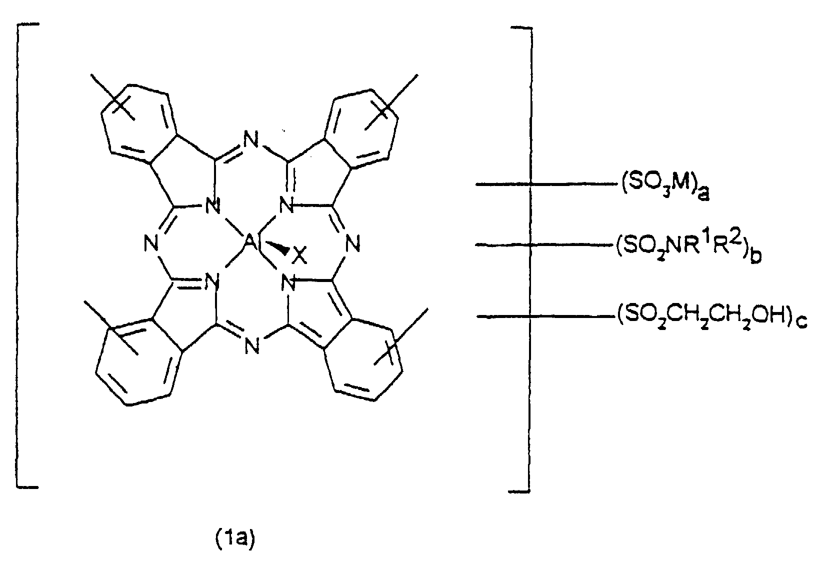 le composé de formule (1a) est éventuellement chloré, sulfaté, thiosulfaté, phosphorylé ou acétylé, en formant de composé de formule (1) dans laquelle Z est -CH₂CH₂Cl, -CH₂CH₂OSO₃M, -CH₂CH₂SSO₃M, -CH₂CH₂OPO₃M ou -CH₂COOM,
qui est éventuellement soumis à une réaction d'élimination, en formant un composé de formule (1) dans laquelle Z est un vinyle,
un composé de formule (1) dans laquelle Z est un vinyle, un β-sulfatoéthyle, un β-thiosulfatoéthyle, un β-phosphatoéthyle ou un β-acétatoéthyle est éventuellement mis à réagir avec une amine de formule H₂NR, en formant un composé de formule (1) dans laquelle Z est -CH₂CH₂NHR, lequel est mis à réagir, après son isolation intermédiaire, avec un composé hétérocyclique de formule Hal-T dans laquelle Hal est un chlore ou un fluor, en formant un composé de formule (1) dans laquelle Z est -CH₂CH₂NR-T ; ou en vue de préparer un composé de formule (1) dans laquelle Z est -CH₂CH₂SO₃M, soit un composé de formule (6) est mis à réagir avec l'acide 1-chloroéthane-2-sulfonique, soit un composé de formule (1) dans laquelle Z est un vinyle est mis à réagir avec M₂SO₃, de préférence Na₂SO₃.

9. Procédé de préparation d'un composé de formule (1) selon au moins l'une des revendications 1 à 7, caractérisé en ce qu'un composé de formule (7) 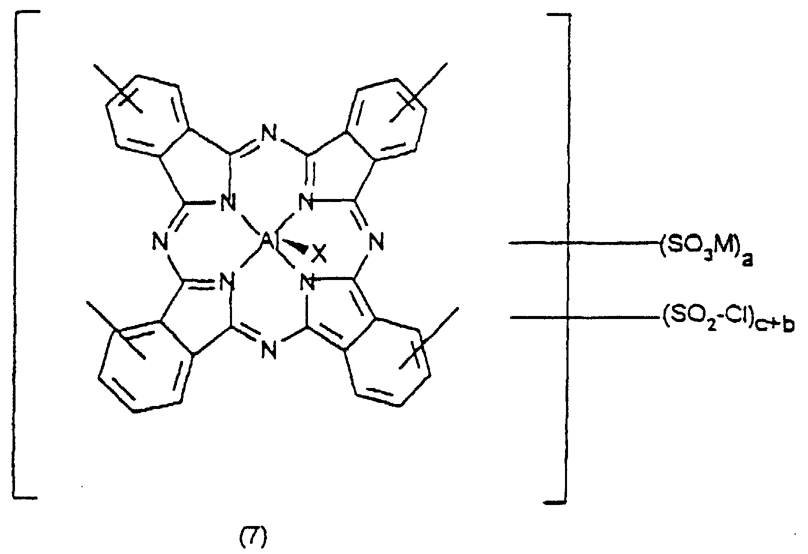 est partiellement réduit en acide sulfinique avec une quantité stoechiométrique d'un réducteur correspondant au nombre c souhaité, lequel est ensuite mis à réagir avec une amine de formule HNR¹R², en formant un composé de formule (6) 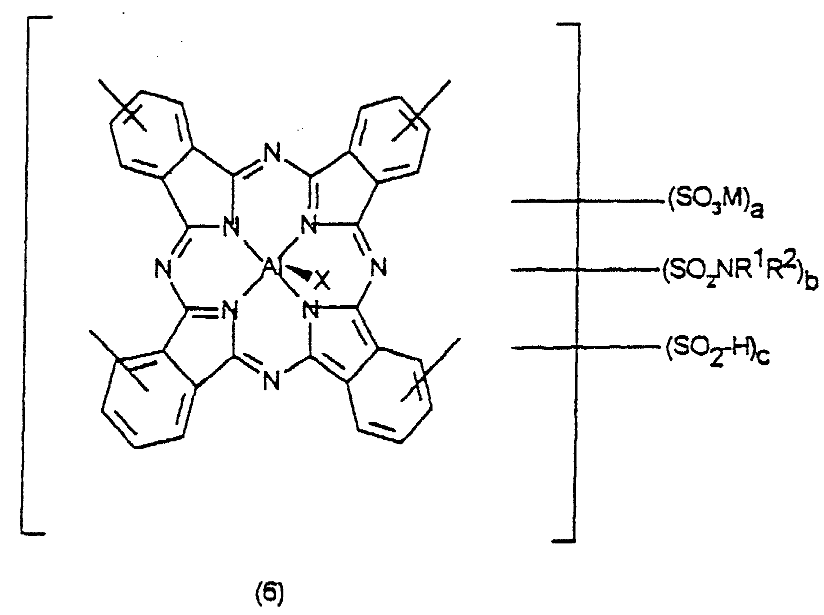 qui est alors soumis à une autre réaction, comme décrit à la revendication 8.

10. Procédé de préparation d'un composé de formule (1) selon au moins l'une des revendications 1 à 7, caractérisé en ce qu'un composé de formule (7) 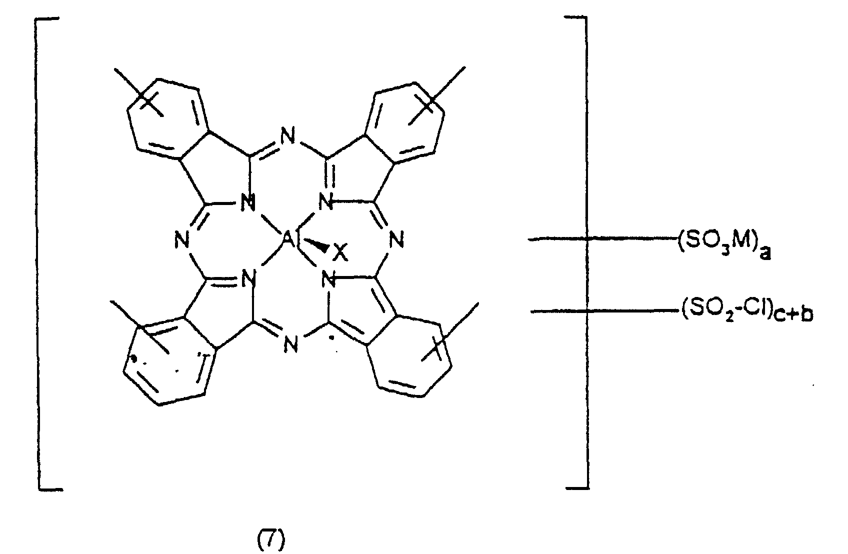 est mis à réagir avec une quantité stoechiométrique d'une amine de formule HNR¹R², correspondant au nombre b souhaité, et le composé formé de formule (5) est soumis à une autre réaction, comme décrit à la revendication 8.

11. Procédé de préparation d'un composé de formule (1b) 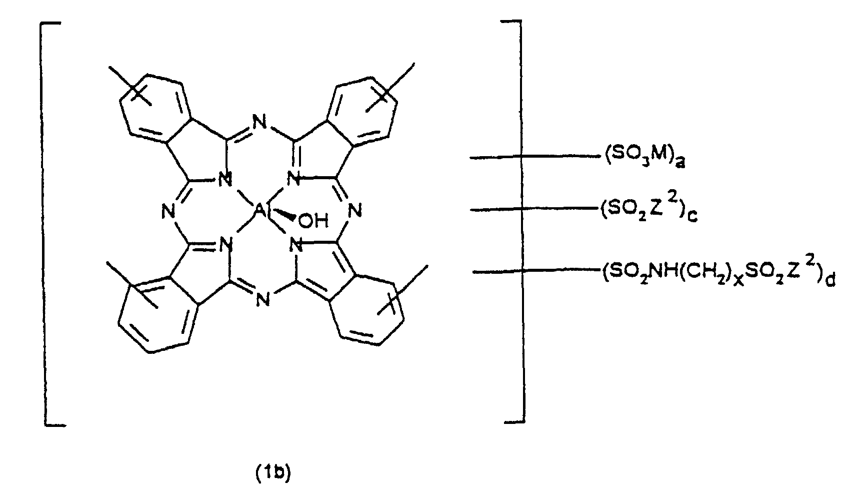 dans laquelle
a est un nombre de 0 à 3,0 ;
c est un nombre de 0,5 à 4,0 ;
d est un nombre de 0,5 à 2,0 ;
x est un nombre de 2 à 6, de préférence 2 ;
Z² représente un vinyle ou un β-sulfatoéthyle et
M représente un hydrogène, un métal alcalin ou un ion ammonium substitué ou non substitué, caractérisé en ce qu'un composé de formule (7a) 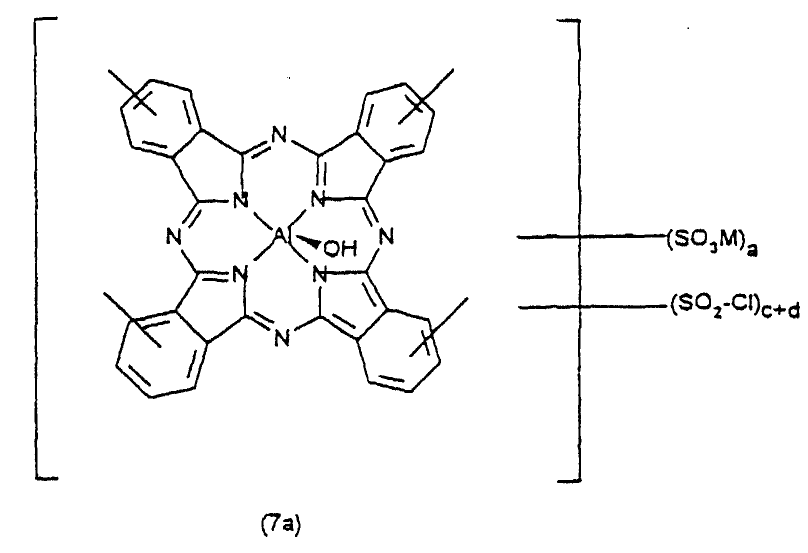 est mis à réagir avec une quantité stoechiométrique d'un acide alkylaminosulfonique de formule H₂N-(CH₂)ₓ-SO₃M, correspondant au nombre d souhaité, dans des conditions alcalines, pour donner un composé de formule (8), 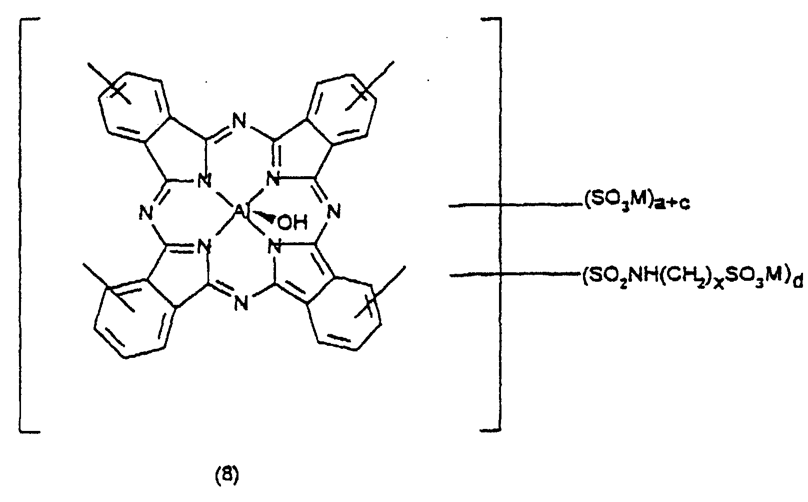 les groupes SO₂Cl correspondant au nombre c étant saponifiés, le composé de formule (8) est mis à réagir avec l'acide chlorosulfonique et le chlorure de thionyle, les groupes sulfo du radical sulfonamide-alkyle et partiellement les groupes sulfo directement liés au chromophore de la phtalocyanine étant transformés en groupes SO₂Cl ; le produit de réaction ainsi formé est réduit par un réducteur, en formant des groupes acide sulfinique à partir des groupes SO₂Cl ; le produit de réaction ainsi formé est éthoxylé, les radicaux acide sulfinique étant transformés en radicaux hydroxyéthylsulfonyle ; et ensuite sulfaté, en formant des composés de formule (1b) dans laquelle Z² est un β-sulfatoéthyle, lesquels peuvent être éventuellement soumis à une élimination pour donner des composés de formule (1b) dans laquelle Z² est un vinyle.

12. Utilisation d'une phtalocyanine à l'aluminium de formule (1) selon l'une ou plusieurs des revendications 1 à 7, pour la teinture et l'impression d'une matière renfermant des groupes hydroxy et/ou carbonamide, de préférence d'une matière fibreuse cellulosique.
